(19) Europäisches Patentamt
European Patent Office
Office européen des brevets

(11) Veröffentlichungsnummer : **0 132 223**
**B1**

(12) # EUROPÄISCHE PATENTSCHRIFT

(45) Veröffentlichungstag der Patentschrift : **30.09.87**

(51) Int. Cl.⁴ : **C 09 B 62/02**, D 06 P 3/66

(21) Anmeldenummer : **84810283.6**

(22) Anmeldetag : **08.06.84**

(54) **Reaktivfarbstoffe, deren Herstellung und Verwendung.**

(30) Priorität : **17.06.83 CH 3329/83**

(43) Veröffentlichungstag der Anmeldung : **23.01.85 Patentblatt 85/04**

(45) Bekanntmachung des Hinweises auf die Patenterteilung : **30.09.87 Patentblatt 87/40**

(84) Benannte Vertragsstaaten : **CH DE FR GB IT LI**

(56) Entgegenhaltungen :
**FR-A- 2 360 642**
**FR-A- 2 417 532**
**GB-A- 1 220 823**
**US-A- 3 663 526**

(73) Patentinhaber : **CIBA-GEIGY AG**
**Klybeckstrasse 141**
**CH-4002 Basel (CH)**

(72) Erfinder : **Seitz, Karl, Dr.**
**Schützenweg 9**
**4104 Oberwil (CH)**
Erfinder : **Scheibli, Peter, Dr.**
**Nussbaumweg 3**
**CH-4103 Bottmingen (CH)**
Erfinder : **Seiler, Herbert, Dr.**
**Leimgrubenweg 60**
**CH-4125 Riehen (CH)**

**EP 0 132 223 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Aus Beispiel 3 der FR-A-2 417 532 ist ein Phthalocyaninfarbstoff bekannt, der einen Fluortriazinrest und einen Isopropoxy-chlortriazinrest enthält, welche über den Rest der p-Phenylen-2,5-disulfonsaüre als Brückenglied miteinander verbunden sind.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bireaktiven Farbstoffen die gestellte Aufgabe gelöst wird.

Gegenstand der Erfindung sind Reaktivfarbstoffe der Formel

$$X_1 - \underset{\underset{R_1}{|}}{N} - D - \underset{\underset{R_2}{|}}{N} - X_2 \qquad (1)$$

worin D der Rest eines Farbstoffes der Mono- oder Polyazo-, Metallkomplexazo-, azo-, Anthrachinon-, Phthalocyanin-, Formazan-, Azomethin-, Dioxazin-, Phenaxin-, Stilben-, Triphenylmethan-, Xanthen-, Thioxanthon-, Nitroaryl-, Naphthochinon-, Pyrenchinon- oder Perylentetracarbimid-Reihe, $R_1$ und $R_2$ unabhängig voneinander Wasserstoff oder ein gegebenenfalls substituierter $C_{1-4}$-Alkylrest, $X_1$ ein unsubstituierter oder substituierter Aminofluor-s-triazin-Rest, und $X_2$ ein heterocyclischer Reaktivrest, der direkt über das —N($R_2$)-Brückenglied an den Farbstoffrest D gebunden ist, ausgenommen ein unsubstituierter oder substituierter Aminofluor-s-triazin-Rest, ist.

Der Rest D in Formel (1) kann in der üblichen Weise substituiert sein. Als Beispiele für weitere Substituenten am Rest D seien genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonal oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsylfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Die Reste $R_1$ und $R_2$ sind, falls es sich um Alkylreste handelt, geradkettig oder verzweigt ; sie können weitersubstituiert sein, z. B. durch Halogen, Hydroxy, Cyan, $C_{1-4}$-Alkoxy, Carboxy oder Sulfo. Als Beispiele für $R_1$ und $R_2$ seien die folgenden Reste genannt : Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind $R_1$ und $R_2$ unabhängig voneinander Wasserstoff, Methyl oder Aethyl.

Als unsubstituierte oder substituierte Aminogruppen in den Fluor-1,3,5-triazinylresten $X_1$ kommen in Betracht : —$NH_2$, Alkylamino-, N,N-Dialkylamino-, Cycloalkyamino-, N,N-Dicycloalkylamino-, Aralkylami-

no-, Arylaminogruppen, gemischtsubstituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen ; als Cycloalkyl-, Aralkyl- und Arylreste kommen insbesondere Cyclohexyl-, Benzyl-, Phenäthyl-, Phenyl- und Naphthylreste in Frage ; heterocyclische Reste sind vor allem Furan-, Thiophen-, Pyrazol-, Pyridin-, Pyrimidin-, Chinolin-, Benzimidazol-, Benzthiazol- und Benzoxazolreste ; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Resten sowie die N-heterocyclischen Ringe können weitersubstituiert sein, z. B. durch : Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino oder Benzoylamino, Ureido, Hydroxy, Carboxy, Sulfmethyl oder Sulfo. Als Beispiele für derartige Aminogruppen seien genannt : $-NH_2$, Methylamino, Aethylamino, Propylamino, Isopropylamino, Butylamino, Hexylamino, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylamino, N-Aethyl-N-phenylamino, N-β-Hydroxyäthyl-N-phenylamino, 2-, 3- oder 4-sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino und Piperazino.

Der heterocyclische Reaktivrest $X_2$ ist ein durch ein abspaltbares Atom oder eine abspaltbare Gruppe substituierter 4-, 5- oder 6-gliedriger heterocyclischer Rest. Vorzugsweise ist $X_2$ ein Halogentriazin- oder Halogenpyrimidinrest ; ausgenommen ist ein unsubstituierter oder substituierter Aminofluor-s-triazinrest in der gleichen Bedeutung wie für $X_1$. Der heterocyclische Reaktivrest $X_2$ ist direkt, d. h. ohne eine weiteres Zwischenglied an das Brückenglied $-N(R_2)-$ gebunden.

Bevorzugt sind Reaktivfarbstoffe der Formel (1), worin D der Rest eines Mono- oder Disazofarbstoffes oder eines Metallkomplexazofarbstoffes ist.

In diesem Falle sind die Reste $-N(R_1)-X_1$ und $-N(R_2)-X_2$ an verschiedene oder an gleiche Reste von Ausgangskomponenten, d. h. Diazo- und Kupplungskomponenten, gebunden. Vorzugsweise sind die Reste $-N(R_1)-X_1$ und $-N(R_2)-X_2$ an je eine Komponente, Diazokomponente oder Kupplungskomponente, gebunden. Die Reaktivfarbstoffe haben dann z. B. die Formel

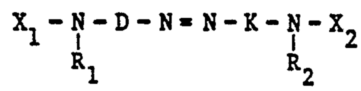

(Ia)

Wenn beide Reste $-N(R_1)-X_1$ und $-N(R_2)-X_2$ an den gleichen Rest einer Ausgangskomponente, D oder K, gebunden sind, so ist dies insbesondere der Rest der Kupplungskomponente K. Die Reaktivfarbstoffe entsprechen dann der Formel

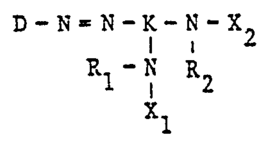

(Ib)

Ferner sind in Betracht zu ziehen, Reaktivfarbstoffe der Formel (1a), worin der Rest D oder K noch einen weiteren Reaktivrest einschliesst, sowie Reaktivfarbstoffe der Formel (1b), worin der Rest D noch einen weiteren Reaktivrest einschliesst. Somit sind auch tri- und tetrareaktive Farbstoffe umfasst. Die zusätzlichen, in D oder K eingeschlossenen Reaktivreste können, wie $X_1$ und $X_2$, über Aminogruppen, oder in anderer Weise, z. B. durch eine direkte Bindung an D bzw. K gebunden sein. Die obigen Erläuterungen gelten sinngemäss auch für Disazafarbstoffe und Metallkomplexazofarbstoffe.

Bevorzugt sind Reaktivfarbstoffe der Formel

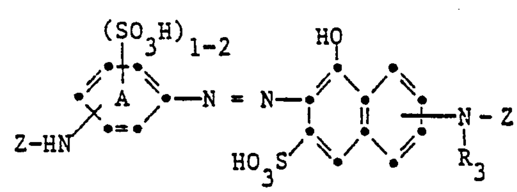

(2)

worin die beiden Reste Z alternativ $X_1$ oder $X_2$ sind, und $X_1$ und $X_2$ die unter Formel (1) angegebenen Bedeutungen haben, $R_3$ Wasserstoff, Methyl oder Aethyl ist, und der Benzolring A gegebenenfalls weitersubstituiert ist.

Bevorzugt sind ebenfalls Reaktivfarbstoffe der Formel

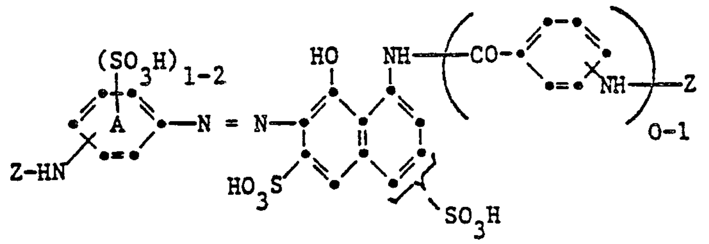 (3)

worin die beiden Reste Z alternativ $X_1$ oder $X_2$ sind, und $X_1$ und $X_2$ die unter Formel (1) angegebenen Bedeutungen haben, und der Benzolring A gegebenenfalls weitersubstituiert ist.

Bevorzugt sind insbesondere Reaktivfarbstoffe der Formel (2), worin der Benzolring A nicht weitersubstituiert ist, sowie Reaktivfarbstoffe der Formel (3), worin der Benzolring A nicht weitersubstituiert ist.

Bevorzugt sind ferner Reaktivfarbstoffe der Formel

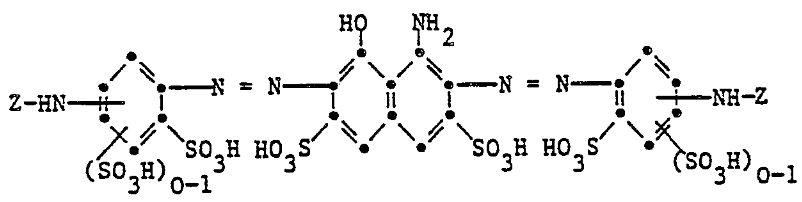 (4)

worin die beiden Reste Z alternativ $X_1$ oder $X_2$ sind, und $X_1$ und $X_2$ die unter Formel (1) angegebenen Bedeutungen haben.

Eine weitere bevorzugte Ausführungsform der Erfindung sind Reaktivfarbstoffe der Formel (1) sowie der übrigen beschriebenen Konstitutionen, worin $X_1$ ein unsubstituierter Aminofluor-s-triazinrest, und $X_2$ ein unsubstituierter oder substituierter Amino- oder Alkoxy-chlor-s-triazin-Rest, oder ein Halogenpyrimidin- oder Halogenpyridazin-Rest ist.

Im besonderen bevorzugt sind erfindungsgemässe Reaktivfarbstoffe, worin $X_1$ ein Rest der Formel

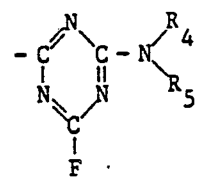 (I)

ist, worin $R_4$ und $R_5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenäthyl, Cyclohexyl, Phenyl, das gegebenenfalls substituiert ist durch Halogen, Nitro, Cyan, Trifluormethyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist, oder worin $R_4$ und $R_5$ zusammen mit dem Aminostickstoffatom einen Morpholino-; Piperidino- oder Piperazinorest bilden, und $X_2$ ein Rest der Formel

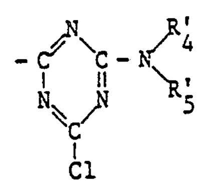 (II)

ist, worin $R'_4$ und $R'_5$ unabhängig voneinander die gleichen Bedeutungen haben wie $R_4$ und $R_5$, unabhängig von diesen, oder ein Rest der Formel

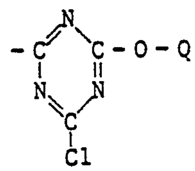

(III)

ist, worin Q ein $C_{1-6}$-Alkylrest ist, der durch Halogen, Hydroxy, Cyan, $C_{1-4}$-Alkoxy, $C_{1-4}$-Alkoxy-$C_{1-4}$-alkoxy, $C_{1-4}$-Alkoxycarbonyl, Carboxy, Sulfo, Sulfato, Sulfamoyl, Carbamoyl, Cyclohexyl oder Phenyl substituiert sein kann, oder ein Rest der Formel

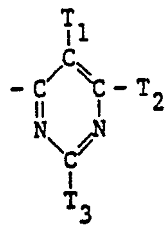

(IV)

ist, worin $T_1$ Wasserstoff, Chlor, Fluor, Cyan, Nitro, Methylsulfonyl oder Methylsulfinyl, $T_2$ Wasserstoff, Methyl, Chlor, Fluor, Methylsulfonyl, $NH_2$ oder ein Alkylamino-, Cycloalkylamino-, Aralkylamino- oder Arylaminorest, und $T_3$ Wasserstoff, Chlor, Fluor, Methylsulfonyl oder Methyl ist, mit der Bedingung, dass mindestens einer der Reste $T_1$, $T_2$ und $T_3$ Chlor oder Fluor ist.

Ausser den weiter oben beschriebenen Reaktivfarbstoffen der Formeln (2), (3) und (4) sind als weitere wertvolle Vertreter die Reaktivfarbstoffe der folgenden Formeln zu nennen :

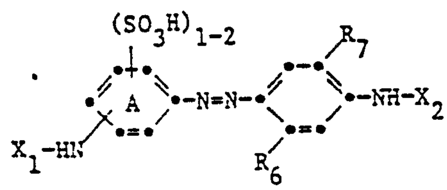

(5)

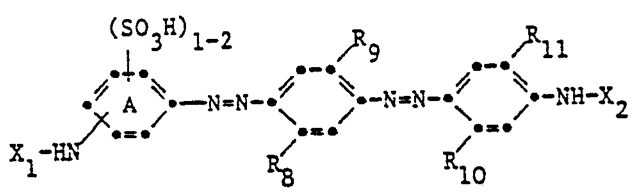

(6)

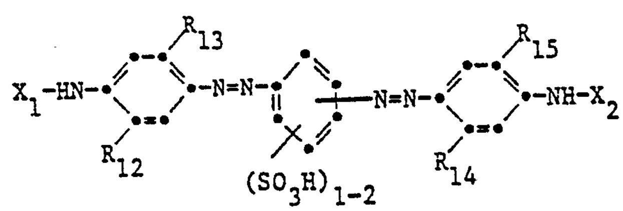

(7)

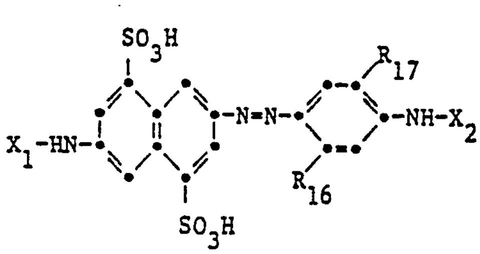

(8)

(Fortsetzung)

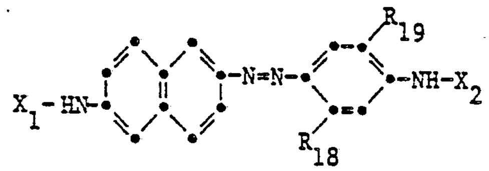

(9)

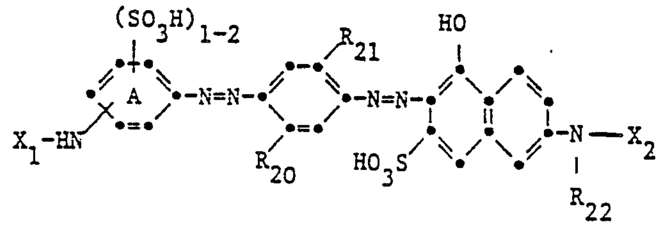

(10)

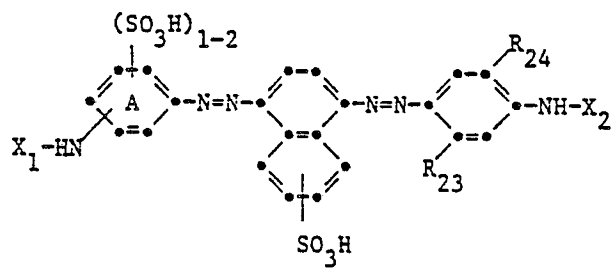

(11)

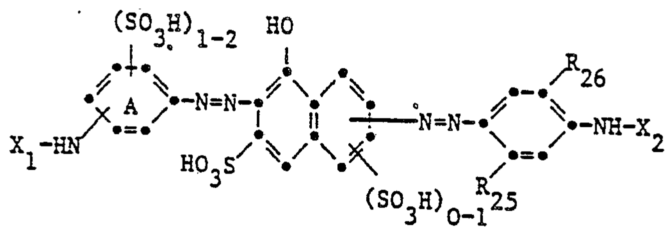

(12)

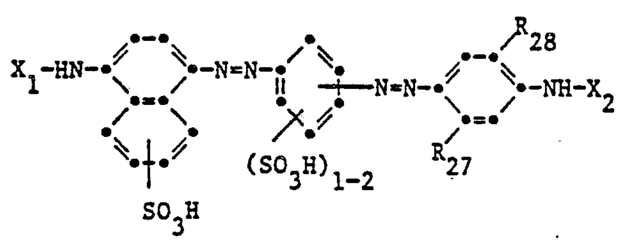

(13)

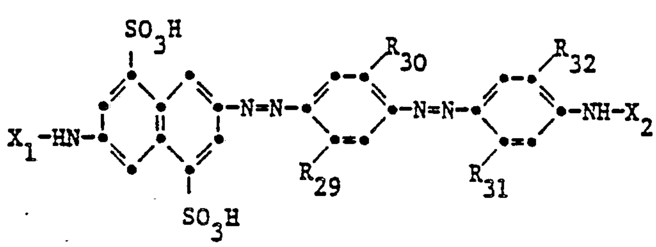

(14)

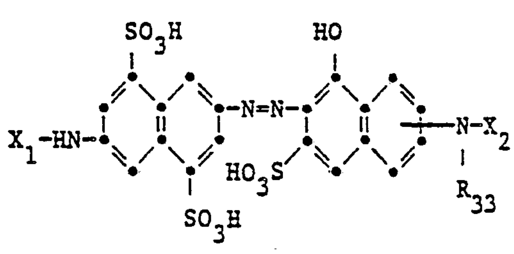

(15)

(Fortsetzung)

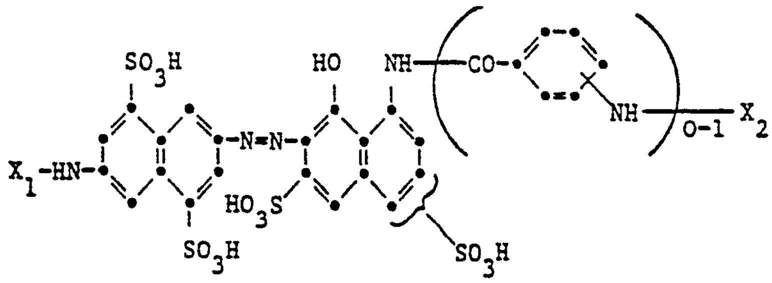

(16)

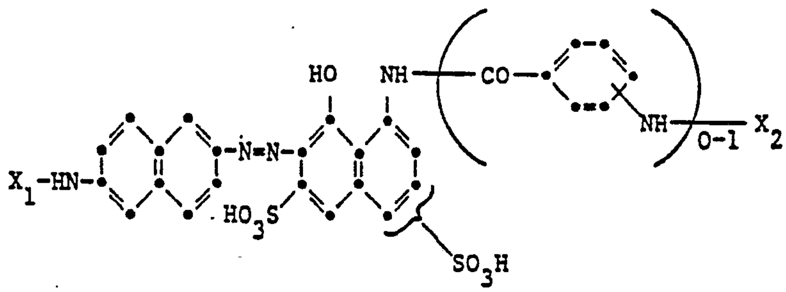

(17)

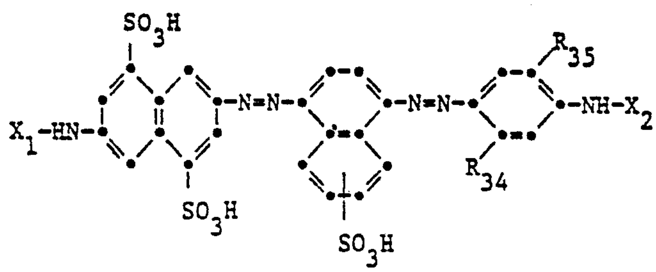

(18)

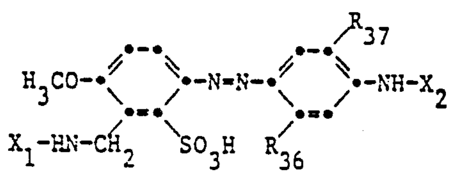

(19)

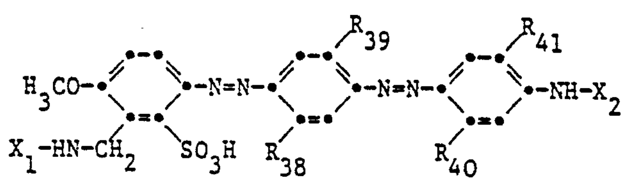

(20)

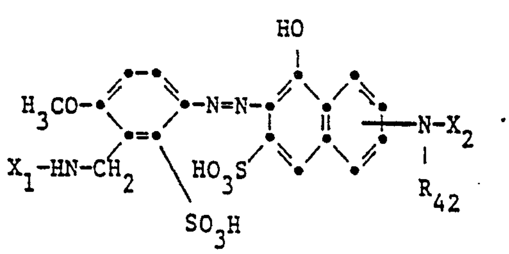

(21)

(Fortsetzung)

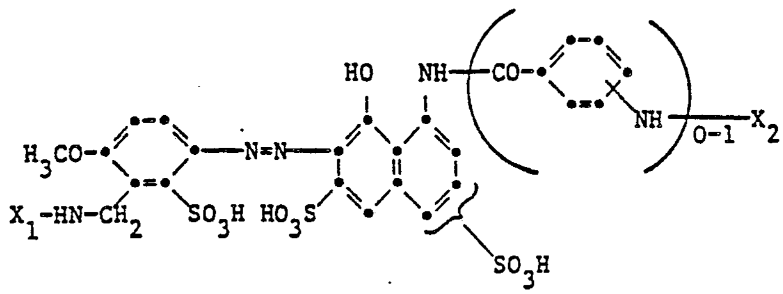

(22)

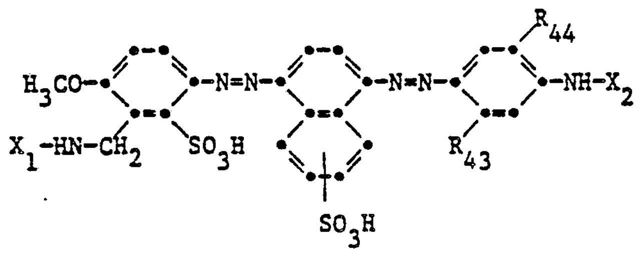

(23)

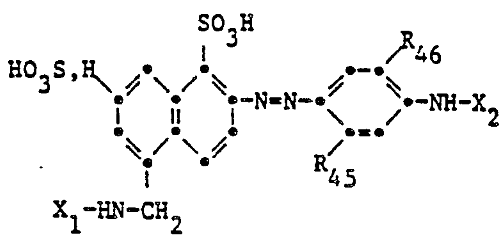

(24)

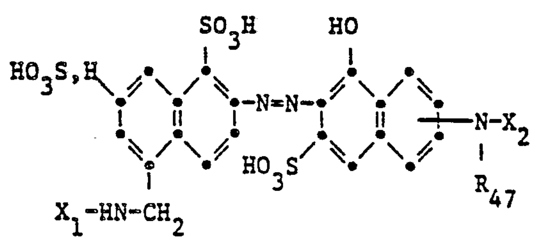

(25)

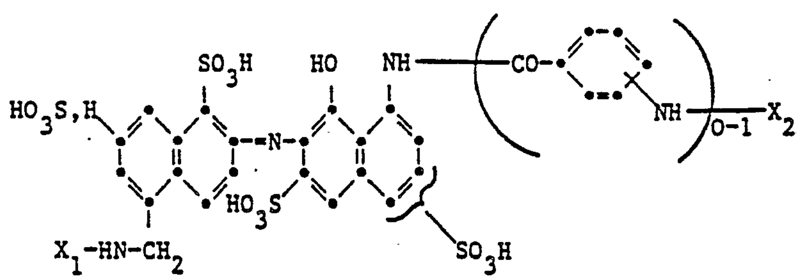

(26)

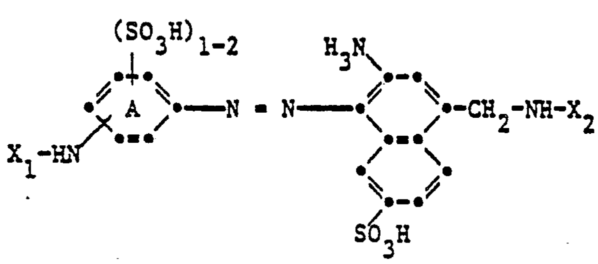

(27)

(Fortsetzung)

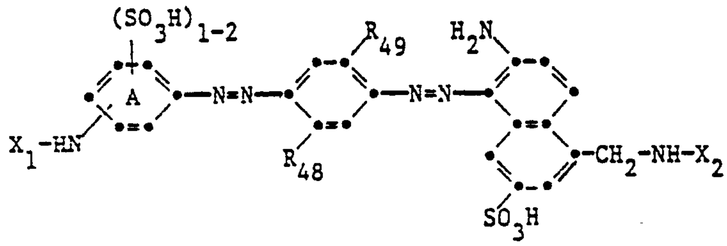

(28)

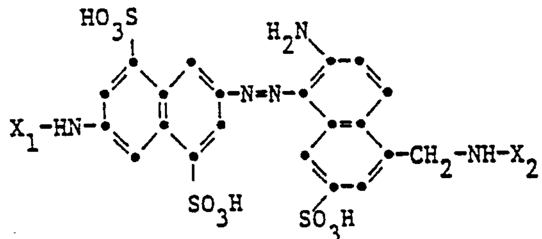

(29)

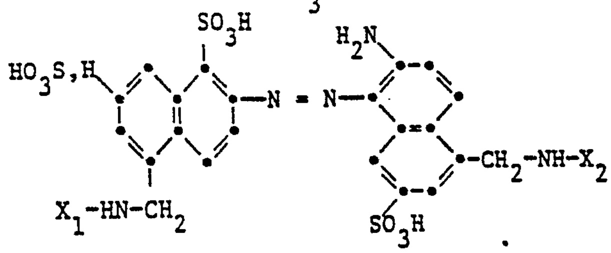

(30)

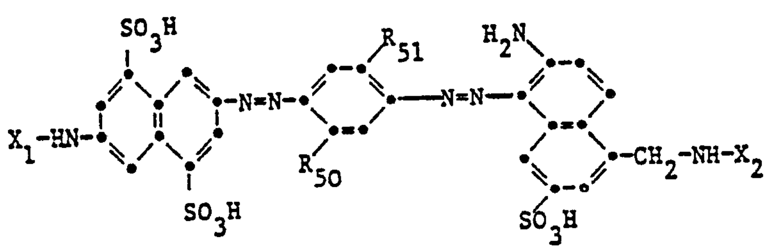

(31)

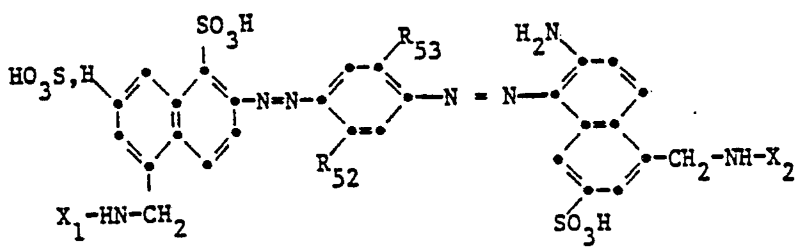

(32)

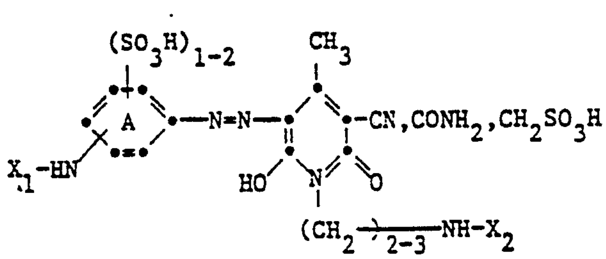

(33)

(Fortsetzung)

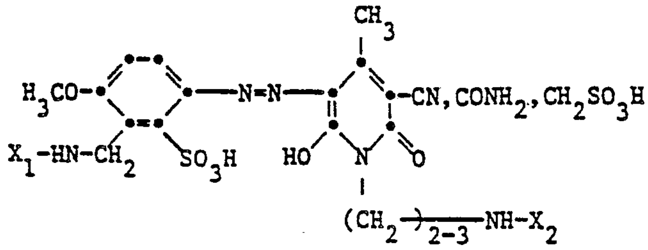

(34)

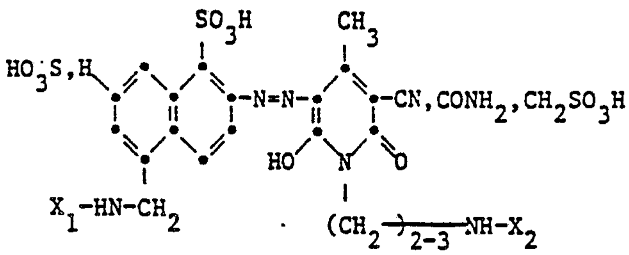

(35)

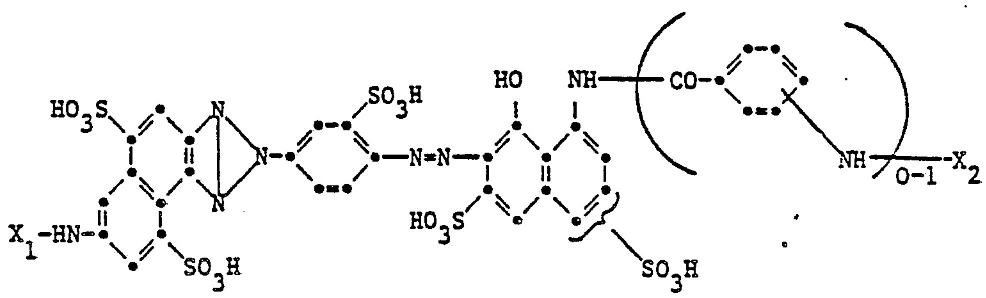

(36)

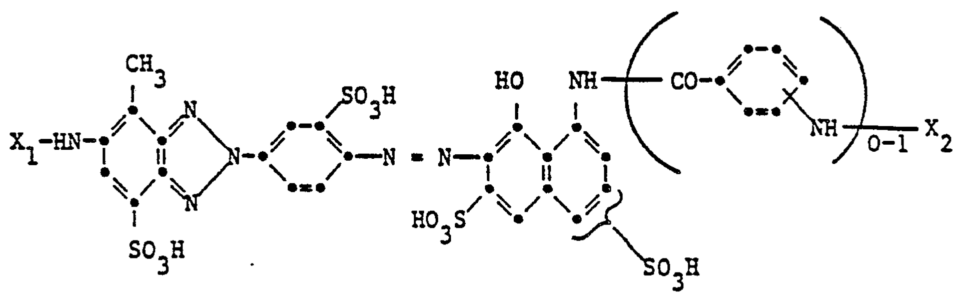

(37)

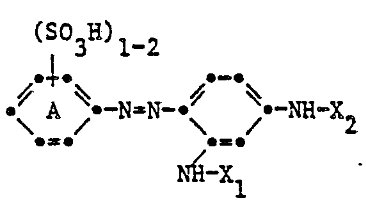

(38)

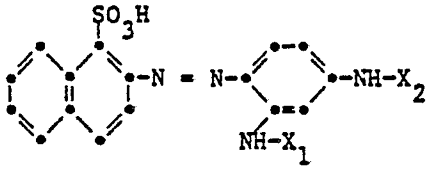

(39)

(Fortsetzung)

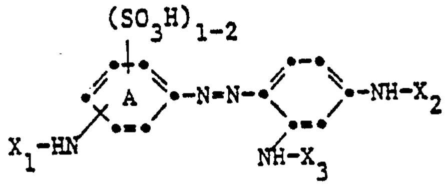

(40)

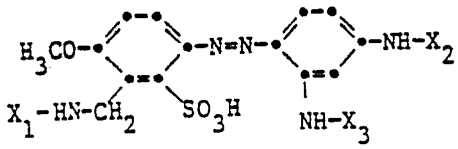

(41)

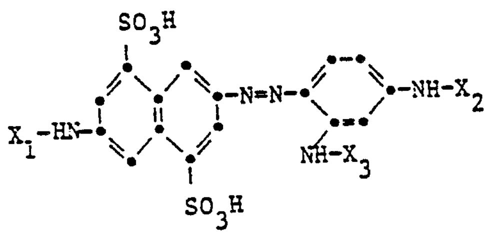

(42)

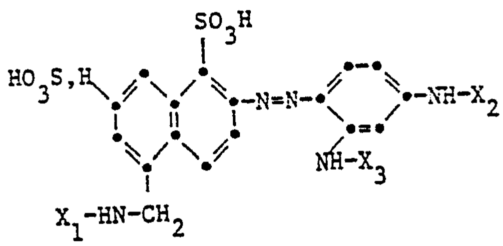

(43)

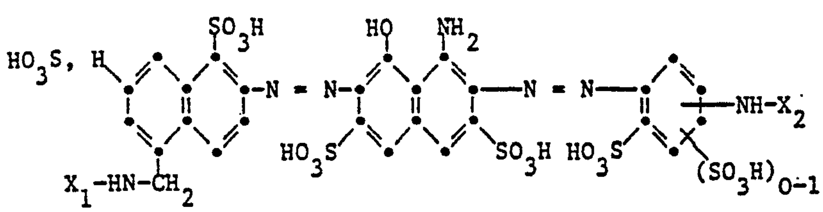

(44)

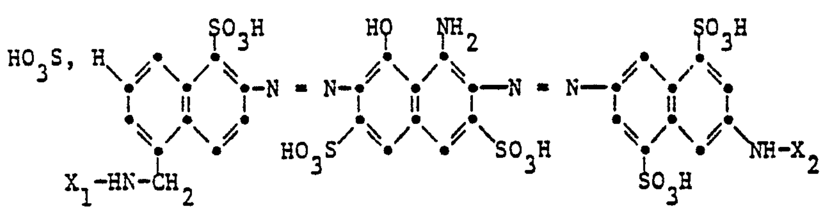

(45)

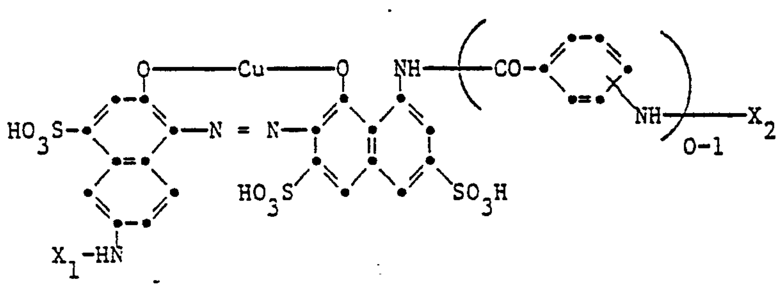

(46)

(Fortsetzung)

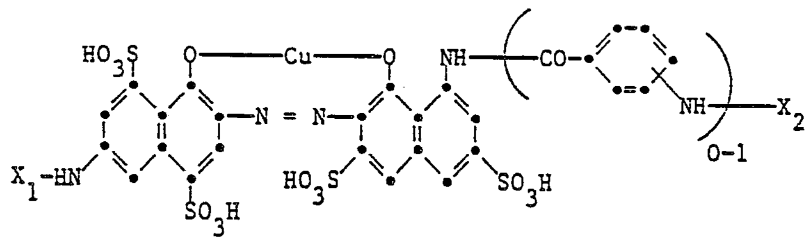

(47)

In den Formeln (5) bis (47) bedeuten die Rest $R_{22}$, $R_{33}$, $R_{42}$ und $R_{47}$, Wasserstoff oder $C_{1-4}$-Alkyl ; die übrigen Reste $R_6$ bis $R_{21}$, $R_{23}$ bis $R_{32}$, $R_{34}$ bis $R_{41}$, $R_{43}$ bis $R_{46}$ und $R_{48}$ bis $R_{53}$ sind Wasserstoff, $C_1$-$C_4$-Alkyl, $C_1$-$C_4$-Alkoxy, $C_1$-$C_4$-Alkanoylamino, Ureido oder Halogen, wobei die Reste $R_6$, $R_7$,... etc. die zu ein und derselben Formel gehören, voneinander unabhängig sind ; $X_1$ und $X_2$ und gegebenenfalls $X_3$ haben die unter den Formeln (I), (II), (III) und (IV) angegebenen Bedeutungen ; und die Benzolringe A sind gegebenenfalls weitersubstituiert. Vorzugsweise bedeuten die Reste $R_{22}$, $R_{33}$, $R_{42}$ und $R_{47}$ Wasserstoff, Methyl oder Aethyl, und die übrigen oben genannten Reste $R_6$ bis $R_{21}$,... usw., Wasserstoff, Methyl, Aethyl, Methoxy, Aethoxy, Acetylamino, Ureido oder Chlor. Vorzugsweise sind in den Reaktivfarbstoffen der Formeln (5), (6), (10) bis (12), (27), (28), (33), (38) und (40) die Benzolringe A nicht weitersubstituiert. In den Formeln (5) bis (47) können die Reste $X_1$ und $X_2$ und gegebenenfalls $X_3$ auch vertauscht sein.

In den bevorzugten Reaktivfarbstoffen der Formeln (2) und (3) sind die Benzolringe A vorzugsweise ebenfalls nicht weitersubstituiert ; als Diazokomponenten werden in diesem Falle vor allem die 1,3-Phenylen-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet. Der Rest $R_3$ in Formel (2) ist insbesondere Wasserstoff, Methyl oder Aethyl.

Bevorzugt sind vor allem Reaktivfarbstoffe der Formeln (1) bis (47), worin $X_1$ ein Rest der Formel (I) ist, worin die Aminogruppe $-NR_4R_5$ : $-NH_2$, N-β-Hydroxyäthylamino, N,N-Di-β-Hydroxyäthylamino, β-Sulfoäthylamino, Phenylamino, das gegebenenfalls im Phenylkern substituiert ist durch Chlor, Methyl, Aethyl, Methoxy, Aethoxy, Acetylamino, Hydroxy, Carboxy, Sulfomethyl oder Sulfo, N-$C_{1-4}$-Alkyl-N-phenylamino, das gegebenenfalls im Phenylkern substituiert ist durch Chlor, Methyl oder Aethyl, N-Sulfo-$C_{1-4}$-alkyl-N-phenylamino, das gegebenenfalls im Phenylkern substituiert ist durch Chlor, Methyl oder Aethyl, N-Hydroxy-$C_{1-4}$-alkyl-N-phenylamino, oder Sulfonaphthylamino ist, und $X_2$ ein 2,4-Difluor-5-chlorpyrimidyl-(6)-Rest ist.

Im Betracht zu ziehen sind ferner auch Reaktivfarbstoffe der Formel (1), worin der Rest $-N(R_1)-X_1$ über einen Rest der Formel

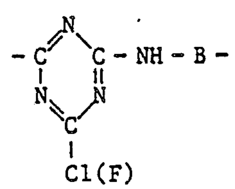

(48)

an den Chromophor gebunden ist. In diesem Falle ist der Rest $-N(R_1)-X_1$ an B gebunden ; B ist ein gegebenenfalls substituiertes aliphatisches oder aromatisches Brückenglied. Das Brückenglied B ist vorzugsweise ein Alkylen- oder Arylenrest. So kann B ein langer (z. B. mit 10 oder mehr Kohlenstoffatomen) oder kürzerer, geradkettiger oder verzweigter Alkylenrest sein ; insbesondere kommt ein Alkylenrest mit 2 bis 6 Kohlenstoffatomen in Betracht, z. B. Aethylen, Propylen, Butylen, Hexylen oder Cyclohexylen. Als Arylenrest ist B z. B. ein Naphthylenrest, der Rest eines Diphenyls oder Stilbens oder insbesondere ein Phenylenrest. Der Rest B kann weitere Substituenten enthalten, z. B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo.

Das Verfahren zur Herstellung der Reaktivfarbstoffe der Formel (1) ist dadurch gekennzeichnet, dass man Farbstoffe der Formel

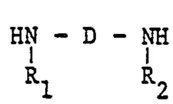

oder ihre Vorprodukte mit einem Fluortriazin und einer heterocyclischen Reaktivkomponente kondensiert, oder die erhaltenen Zwischenprodukte in die gewünschten Endfarbstoffe überführt, und gegebenenfalls in den reaktiven Zwischenprodukten oder den erhaltenen Farbstoffen abspaltbare Substituenten

an den Reaktivresten durch Kondensation mit Verbindungen, die austauschbare Wasserstoffatome enthalten, durch nichtreaktive Substituenten ersetzt.

Bei der Herstellung der bevorzugten Azofarbstoffe müssen die Diazokomponenten und die Kupplungskomponenten zusammen zwei Aminogruppen —N($R_1$)H und —N($R_2$)H, und gegebenenfalls weitere acylierbare Aminogruppen enthalten. Gegebenenfalls verwendet man entsprechende Acetylamino- oder Nitroverbindungen, worin die Acetylamino- bzw. Nitrogruppe vor der Kondensation mit einem Halogentriazin, Halogenpyrimidin oder dergl. durch Verseifen bzw. Reduzieren in die $NH_2$ Gruppe übergeführt wird. Die Einführung der Reaktivreste $X_1$ und $X_2$ erfolgt durch Kondensation von Farbstoffen oder Farbstoffvorprodukten, welche acylierbare Aminogruppen enthalten, mit faserreaktiven halogenierten Acylierungsmitteln. Bei der Herstellung der Endfarbstoffe aus Vorprodukten handelt es sich meistens um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nach einander aus, wobei die Reihenfolge der einfachen Reaktionen zwischenden einzelnen Reaktionskomponenten vorteilhafterweise sich nach den besonderen Bedingungen richtet. Da unter bestimmten Voraussetzungen Hydroxyle eines Halogentriazin-6 oder Halogenpyrimidinrestes etc. eintritt, muss ein Zwischenprodukt, welches Acetylaminogruppen enthält, zwecks Abspaltung der Acetylgruppen verseift werden, bevor mit einem Aminodifluortriazin oder Trifluortriazin etc. kondensiert wird. Als weitere Umwandlungsreaktion kommt z. B. die nachträgliche Umsetzung eines Dihalogentriazinylrestes mit einem Amin in Betracht. Welche Reaktion bei der Herstellung eines sekundären Kondensationsproduktes aus Amin $HNR_4R_5$, 2,4,6-Trihalogen-s-triazin und Diaminobenzolsulfonsäure zweckmässigerweise zuerst ausgeführt wird, die des Trihalogentriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen. Die wichtigsten Verfahrensvarianten sind in den Ausführungsbeispielen dargestellt.

Im folgenden sollen mögliche Ausgangsstoffe, die zur Herstellung der bevorzugten Reaktivfarbstoffe der Formel (1), worin D der Rest eines Mono- oder Polyazofarbstoffes ist, verwendet werden können, einzeln genannte werden.

Diazokomponenten

1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z. B. 1-Acetylamino-3-aminobenzol-4-sulfonsäure oder 1-Acetylamino-4-aminobenzol-3-sulfonsäure.

Falls die beiden Reste —N($R_1$)—$X_1$ und —N($R_2$)—$X_2$ in Formel (1) an die gleiche Komponente, z. B. die Kupplungskomponente, gebunden sind, wie dies weiter vom beschrieben ist, können als Diazokomponenten auch solche verwendet werden, die neben der zu diazotierenden Aminogruppe keine acylierbare Aminogruppe enthalten, wie z. B. Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylben-

zol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Amino-naphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminoazobenzol-3,4'-disulfonsäure, 3-Methoxy-4-amino-6-methylazobenzol-2',4'-disulfonsäure oder 3-Methoxy-4-amino-6-methylazobenzol-2',5'-disulfonsäure.

Kupplungskomponenten

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- byw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. 4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol.

Reaktivkomponenten

2-Methylsulfonyl-4-chlor-6-methylpyrimidin, 2,4-Bis-methylsulfonyl-6-methylpyrimidin, 2,4,6-Tri oder 2,4,5,6-Tetrachlorpyrimidin, 2,4,6-Tri- oder 2,4,5,6-Tetrabrompyrimidin, 2-Methylsulfonyl-4,5-dichlor-6-methylpyrimidin, 2,4-Dichlorpyrimidin-5-sulfonsäure, 5-Nitro- oder 5-Cyan-2,4,6-trichlorpyrimidin, 2,4-Dichlor-5-chlormethyl-6-methyl-pyrimidin, 2,4-Difluor-5-chlor-6-methylpyrimidin, 2-Methyl-5-methylsulfonyl-4,6-dichlorpyrimidin, 2,4-Dibrom-5-brommethyl-6-methyl-pyrimidin, 2,4-Dichlor-5-chlormethylpyrimidin, 2,4-Dibrom-5-brommethylpyrimidin, 2,5,6-Trichlor-4-methylpyrimidin, 2,6-Dichlor-4-trichlormethylpyrimidin, 2,4-Bismethylsulfonyl-5-chlor-6-methylpyrimidin, 2,4,6-Trimethylsulfonyl-1,3,5-triazin, 2,4-Dichlorpyrimidin, 3,6-Dichlorpyridazin, 2,6-Dichlor- oder 2,6-Dibrom-4-carboäthoxypyrimidin, 2,4,5-Trichlorpyrimidin, 2,4,5,6-Tetrachlorpyrimidin, 5-Brom-2,4,6-trichlorpyrimidin, 5-Acetyl-2,4,6-trichlorpyrimidin, 5-Nitro-6-methyl-2,4-dichlorpyrimidin, 5-Nitro-6-methyl-2,4-dichlorpyrimidin, 2,4,6-Trichlor-5-brompyrimidin, 2,4,5,6-Tetrafluorpyrimidin, 2,4,6-Trichlor-5-cyanpyrimidin, 4,6-Difluor-5-chlorpyrimidin, 2,4,6-Trifluor-5-chlorpyrimidin, 2,4,5-Trifluorpyrimidin, 2,4,6-Tribrom-s-triazin, 2,4,6-Trifluor-s-triaizin (Cyanurfluorid) bzw. die primären Kondensationsprodukte von 2,4,6-Trifluor-s-triazin mit den unten genannten Aminen, 2,4,6-Trichlor-s-triazin (Cyanurchlorid) bzw. die primären Kondensationsprodukte von 2,4,6-Trichlor-s-triazin mit den unten genannten Aminen oder Hydroxyverbindungen.

Amine

Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Phenäthylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, 3- und 4-Acetylaminoanilin, 2,5-Dimethoxyanilin, o-, m- und p-Anisidin, o-, m- und p-Phenetidin, 2-Methoxy-5-methylanilin, 2-Aethoxy-5-methoxyanilin, 4-Bromanilin, 3-Aminobenzamid, 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methansulfonsäure, 2-Aminotoluol-4-sulfonsäure, 2-Aminotoluol-5-sulfonsäure, p-Aminosalicylsäure, 1-Amino-4-carboxybenzol-3-sulfonsäure, 1-Amino-2-carboxybenzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7-, und -8-sulfonsäure, 1-Naphthylamin-2,4-, -2,5-, -2,7-, -2,8-, -3,5-, -3,6-, -3,7-, -3,8-,

-4,6-, -4,7-, -4,8- und 5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8-, und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyridin, Morpholin, Pipieridin und Piperazin.

Hydroxyverbindungen

Methanol, Aethanol, Propanol, Isopropanol, n-Butanol, Isobutanol, sek.-Butanol, tert.-Butanol, Pentanol, Hexanol, Cyclohexanol, β-Methoxyäthanol, β-Aethoxyäthanol, γ-Methoxypropanol, γ-Aethoxypropanol, β'-Aethoxy-β-äthoxyäthanol, Glycolsäure.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Kondensation der Reaktivkomponenten mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wässriger Alkalihydroxyde, -carbonate oder -bicarbonate neutralisiert.

Die Reaktivfarbstoffe der Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z. B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d. h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z. B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1

Zu 69,0 Teilen der in 600 Teilen Wasser gelösten Kupplungskomponente der Formel

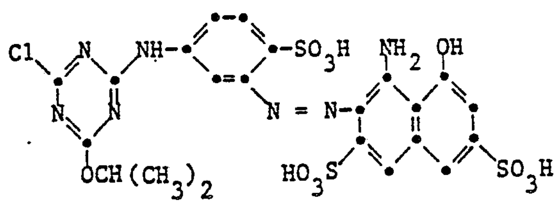

(hergestellt durch saure Kupplung von diazotiertem 2-(3′-Amino-4′-sulfophenylamino)-4-chlor-6-isopropoxy-1,3,5-triazin auf 1-Amino-8-hydroxynaphthalin-3,6-disulfonsäure) wird bei 0 bis 5 °C eine Mischung von 45,6 Teilen diazotiertem 2-(3′-Amino-4′-sulfophenylamino)-4-fluor-6-(2″-sulfophenylamino)-1,3,5-triazin mit 300 Teilen Wasser gegeben. Nach vollständiger Kupplungsreaktion bei pH 6,5 bis 7,5 wird der gebildete Reaktivfarbstoff der Formel

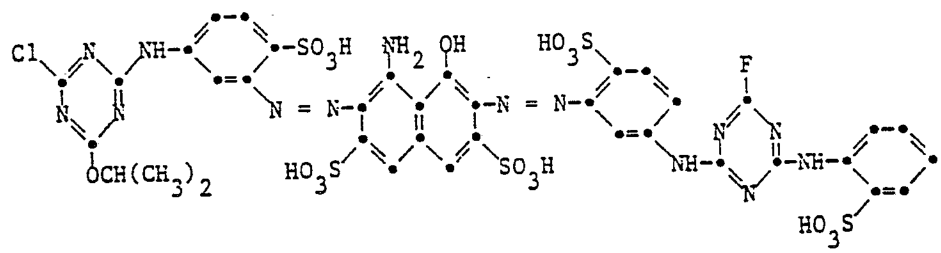

durch Eindampfen oder Gefriertrocknen der Reaktionslösung bei pH 7 isoliert. Er färbt Baumwolle in blauen Tönen.

Weitere wertvolle Reaktivfarbstoffe, die Baumwolle in den in Tabelle 1, Spalte 5, angegebenen Farbtönen färben, werden erhalten, wenn man gemäss den Angaben in Beispiel 1 die in Spalte 2 angegebene diazotierte Diazokomponente sauer auf die in Spalte 3 angegebene Kupplungskomponente kuppelt, und auf die so erhaltene Monoazoverbindung die in Spalte 4 angegebene diazotierte Diazokomponente kuppelt.

(Siehe Tabelle 1 Seite 17 ff.)

Tabelle 1

| Nr. | Diazokomponente | Kupplungskomponente | Diazokomponente | Farbton auf Baumwolle |
|---|---|---|---|---|
| 1 | 2-(3'-Amino-4'-sulfophenylamino)-4-chlor-6-isopropoxy-1,3,5-triazin | 1-Amino-8-hydroxynaphthalin-3,6-disulfonsäure | 2-(3'-Amino-4'-sulfophenylamino)-4-fluor-6-(1",5"-disulfonaphth-2"-ylamino)-1,3,5-triazin | blau |
| 2 | do. | do. | 2-(4'-Amino-2',5'-disulfophenylamino)-4-fluor-6-(1"-sulfonaphth-2"-ylamino)-1,3,5-triazin | do. |
| 3 | do. | do. | 2-(3'-Amino-4'-sulfophenylamino)-4-fluor-6-(2",5"-disulfophenylamino)-1,3,5-triazin | do. |
| 4 | do. | do. | 2-(4'-Amino-2',5'-disulfophenylamino)-4-fluor-6-(2"-chlor-5"-sulfophenylamino)-1,3,5-triazin | do. |
| 5 | do. | do. | 2-(3'-Amino-4'-sulfophenylamino)-4-fluor-6-(N-äthyl-N-phenylamino)-1,3,5-triazin | do. |
| 6 | 2-(4'-Amino-2',5'-disulfophenylamino)-4-chlor-6-isopropoxy-1,3,5-triazin | do. | 2-(3'-Amino-4'-sulfophenylamino)-4-fluor-6-(1",5"-disulfonaphth-2"-ylamino)-1,3,5-triazin | grünstichig blau |
| 7 | do. | do. | 2-(4'-Amino-2',5'-disulfophenylamino)-4-fluor-6-(1"-sulfo maphth-2"-ylamino)-1,3,5-triazin | do. |

Tabelle 1 (Fortsetzung)

| Nr. | Diazokomponente | Kupplungskomponente | Diazokomponente | Farbton auf Baumwolle |
|---|---|---|---|---|
| 8 | 2-(4'-Amino-2',5'-disulfo-phenylamino)-4-chlor-6-isopropoxy-1,3,5-triazin | 1-Amino-8-hydroxynaphthalin-3,6-disulfonsäure | 2-(3'-Amino-4'-sulfophenylamino)-4-fluor-6-(2",5"-di-sulfophenylamino)-1,3,5-triazin | grünstichig blau |
| 9 | do. | do. | 2-(4'-Amino-2',5'-disulfo-phenylamino)-4-fluor-6-(2"-chlor-5"-sulfophenylamino)-1,3,5-triazin | do. |
| 10 | do. | do. | 2-(3'-Amino-4'-sulfophenyl-amino)-4-fluor-6-(N-äthyl-N-phenylamino)-1,3,5-triazin | do. |
| 11 | do. | do. | 2-(3'-Amino-4'-sulfophenylamino)-4-fluor-6-(2"-sulfophenylamino)-1,3,5-triazin | do. |
| 12 | 2-(4'-Amino-3'-sulfophenyl-amino)-4-chlor-6-(β-äthoxyäthoxy)-1,3,5-triazin | do. | 2-(3'-Amino-4'-sulfophenyl-amino)-4-fluor-6-(1",5"-di-sulfonaphth-2"-ylamino)-1,3,5-triazin | do. |
| 13 | do. | do. | 2-(4'-Amino-2',5'-disulfo-phenylamino)-4-fluor-6-(1"-sulfonaphth-2"-ylamino)-1,3,5-triazin | do. |
| 14 | do. | do. | 2-(3'-Amino-4'-sulfophenylamino-4-fluor-6-(2",5"-di-sulfophenylamino)-1,3,5-triazin | do. |

Tabelle 1 (Fortsetzung)

| Nr. | Diazokomponente | Kupplungskomponente | Diazokomponente | Farbton auf Baumwolle |
|---|---|---|---|---|
| 15 | 2-(4'-Amino-3'-sulfophenylamino)-4-chlor-6-(β-äthoxyäthoxy)-1,3,5-triazin | 1-Amino-8-hydroxynaphthalin-3,6-disulfonsäure | 2-(4'-Amino-2',5'-disulfophenylamino)-4-fluor-6-(2"-chlor-5"-sulfophenylamino)-1,3,5-triazin | grünstichig blau |
| 16 | do. | do. | 2-(3'-Amino-4'-sulfophenylamino)-4-fluor-6-(N-äthyl-N-phenylamino)-1,3,5-triazin | blau |
| 17 | do. | do. | 2-(3'-Amino-4'-sulfophenylamino)-4-fluor-6-(2"-sulfophenylamino)-1,3,5-triazin | do. |
| 18 | 2-(3'-Amino-4'-sulfophenylamino)-4-fluoro-6-(1",5"-disulfonaphth-2"-ylamino)-1,3,5-triazin | do. | 2-(4'-Amino-3'-sulfophenylamino)-4-chlor-6-(β-äthoxyäthoxy)-1,3,5-triazin | do. |
| 19 | do. | do. | 2-(3'-Amino-4'-sulfophenylamino)-4-chlor-6-isopropoxy-1,3,5-triazin | do. |
| 20 | do. | do. | 2-(4'-Amino-2',5'-disulfophenylamino)-4-chlor-6-isopropoxy-1,3,5-triazin | do. |
| 21 | 2-(4'-Amino-2',5'-disulfophenylamino)-4-fluor-6-(1"-sulfonaphth-2"-ylamino)-1,3,5-triazin | do. | 2-(4'-Amino-3'-sulfophenylamino)-4-chlor-6-(β-äthoxyäthoxy-1,3,5-triazin | grünstichig blau |

Tabelle 1 (Fortsetzung)

| Nr. | Diazokomponente | Kupplungskomponente | Diazokomponente | Farbton auf Baumwölle |
|---|---|---|---|---|
| 22 | 2-(4'-Amino-2',5'-disulfophenylamino)-4-fluor-6-(1"-sulfonaphth-2"-ylamino)-1,3,5-triazin | 1-Amino-8-hydroxynaphthalin-3,6-disulfonsäure | 2-(3'-Amino-4'-sulfophenylamino)-4-chlor-6-isopropoxy-1,3,5-triazin | grünstichig blau |
| 23 | do. | do. | 2-(4'-Amino-2',5'-disulfophenylamino)-4-chlor-6-isopropoxy-1,3,5-triazin | do. |
| 24 | 2-(3'-Amino-4'-sulfophenylamino)-4-fluor-6-(2",5"-disulfophenylamino)-1,3,5-triazin | do. | 2-(4'-Amino-3'-sulfophenylamino)-4-chlor-6-(β-äthoxyäthoxy)-1,3,5-triazin | blau |
| 25 | do. | do. | 2-(3'-Amino-4'-sulfophenylamino)-4-chlor-6-isopropoxy-1,3,5-triazin | do. |
| 26 | do. | do. | 2-(4'-Amino-2',5'-disulfophenylamino)-4-chlor-6-isopropoxy-1,3,5-triazin | do. |
| 27 | 2-(4'-Amino-2',5'-disulfophenylamino)-4-fluor-6-(2"-chlor-5"-sulfophenylamino)-1,3,5-triazin | do. | 2-(4'-Amino-3'-sulfophenylamino)-4-chlor-6-(β-äthoxyäthoxy)-1,3,5-triazin | grünstichig blau |
| 28 | do. | do. | 2-(3'-Amino-4'-sulfophenylamino)-4-chlor-6-isorpropoxy-1,3,5-triazin | blau |

Tabelle 1 (Fortsetzung)

| Nr. | Diazokomponente | Kupplungskomponente | Diazokomponente | Farbton auf Baumwolle |
|---|---|---|---|---|
| 29 | 2-(4'-Amino-2',5'-disulfophenylamino)-4-fluor-6-(2"-chlor-5"-sulfophenylamino)-1,3,5-triazin | 1-Amino-8-hydroxynaphthalin-3,6-disulfonsäure | 2-(4'-Amino-2',5'-disulfophenylamino)-4-chlor-6-isopropoxy-1,3,5-triazin | grünstichig blau |
| 30 | 2-(3'-Amino-4'-sulfophenylamino)-4-fluor-6-(2"-sulfophenylamino)-1,3,5-triazin | do. | 2-(4'-Amino-3'-sulfophenylamino)-4-chlor-6-(β-äthoxyäthoxy)-1,3,5-triazin | blau |
| 31 | do. | do. | 2-(3'-Amino-4'-sulfophenylamino)-4-chlor-6-isopropoxy-1,3,5-triazin | do. |
| 32 | do. | do. | 2-(4'-Amino-2',5'-disulfophenylamino)-4-chlor-6-isopropoxy-1,3,5-triazin | do. |
| 33 | 2-(3'-Amino-4'-sulfophenylamino)-4-fluor-6-(N-äthyl-N-phenylamino)-1,3,5-triazin | do. | 2-(4'-Amino-3'-sulfophenylamino)-4-chlor-6-(β-äthoxyäthoxy)-1,3,5-triazin | do. |
| 34 | do. | do. | 2-(3'-Amino-4'-sulfophenylamino)-4-chlor-6-isopropoxy-1,3,5-triazin | do. |
| 35 | do. | do. | 2-(4'-Amino-2',5'-disulfophenylamino)-4-chlor-6-isopropoxy-1,3,5-triazin | do. |
| 36 | 2-(4'-Amino-2',5'-disulfophenylamino)-4-chlor-6-isopropoxy-1,3,5-triazin | 1-Amino-8-hydroxynaphthalin-4,6-disulfonsäure | 2-(4'-Amino-2',5'-disulfophenylamino)-4-fluor-6-(2",5"-disulfophenylamino)-1,3,5-triazin | grünstichig blau |

Beispiel 2

23,9 Teile 2-Amino-5-hydroxynaphthalin-7-sulfonsäure werden in 800 ml Wasser neutral gelöst. Bei 45 °C werden 22,9 Teile 2,4-Dichlor-6-isopropoxy-1,3,5-triazin zugetropft, wobei der pH der Reaktionsmischung durch gleichzeitige Zugabe von 2n Natriumhydroxydlösung bei 7,0 bis 7,5 gehalten wird. Nach vollständiger Reaktion wird bei 0 bis 5 °C eine Mischung von 45,6 Teilen diazotiertem 2-(3'-Amino-4'-sulfophenylamino)-4-fluor-6-(2''-sulfophenylamino)-1,3,5-triazin mit 300 Teilen Wasser zugegeben. Nach vollständiger Kupplungsreaktion pH 6,5 bis 7,5 wird der gebildete Reaktivfarbstoff der Formel

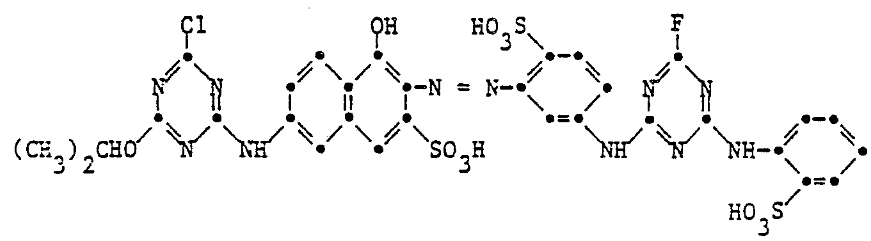

durch Eindampfen der Reaktionslösung bei pH 7 isoliert. Er färbt Baumwolle in orangen Tönen.

Weitere wertvolle Reaktivfarbstoffe, die Baumwolle in den in Tabelle 2, Spalte 5, angegebenen Farbtönen färben, werden erhalten, wenn man gemäss den Angaben in Beispiel 2 die in Spalte 2 angegebene Kupplungskomponente mit dem in Spalte 3 angegebenen Acylierungsmittel acyliert und auf das so erhaltene Zwischenprodukt die in Spalte 4 angegebene diazotierte Diazokomponente kuppelt.

(Siehe Tabelle 2 Seite 23 ff.)

Tabelle 2

| Nr. | Kupplungskomponente | Acylierungsmittel | Diazokomponente | Farbton auf Baumwolle |
|---|---|---|---|---|
| 1 | 2-Amino-5-hydroxynaphthalin-7-sulfonsäure | 2,4-Dichlor-6-isopropoxy-1,3,5-triazin | 2-(3'-Amino-4'—sulfophenylamino)-4-fluor-6-(1",5"-disulfonaphth-2"-ylamino)-1,3,5-triazin | orange |
| 2 | do. | do. | 2-(4'-Amino-2',5'-disulfophenylamino)-4-fluor-6-(1"-sulfonaphth-2"-ylamino)-1,3,5-triazin | do. |
| 3 | do. | do. | 2-(3'-Amino-4'-sulfophenylamino)-4-fluor-6-(2",5"-disulfophenylamino)-1,3,5-triazin | do. |
| 4 | do. | do. | 2-(4'-Amino-2',5'-disulfophenylamino)-4-fluor-6-(2"-chlor-5"-sulfophenylamino)-1,3,5-triazin | do. |
| 5 | do. | do. | 2-(3'-Amino-4'-sulfophenylamino)-4-fluor-6-(N-äthyl-N-phenylamino)-1,3,5-triazin | do. |
| 6 | do | 2,4-Dichlor-6-(β-äthoxyäthoxy)-1,3,5-triazin | 2-(3'-Amino-4'-sulfophenylamino)-4-fluor-6-(1",5"-disulfonaphth-2"-ylamino)-1,3,5-triazin | do. |
| 7 | do. | do. | 2-(4'-Amino-2',5'-disulfophenylamino)-4-fluor-6-(1"-sulfonaphth-2"-ylamino)-1,3,5-triazin | do. |
| 8 | do. | do. | 2-(3'-Amino-4'-sulfophenylamino)-4-fluor-6-(2",5"-disulfophenylamino)-1,3,5-triazin | do. |

Tabelle 2 (Fortsetzung)

| Nr. | Kupplungskomponente | Acylierungsmittel | Diazokomponente | Farbton auf Baumwolle |
|---|---|---|---|---|
| 9 | 2-Amino-5-hydroxynaphthalin-7-sulfonsäure | 2,4-Dichlor-6-(β-äthoxyäthoxy)-1,3,5-triazin | 2-(4'-Amino-2',5'-disulfophenylamino)-4-fluor-6-(2"-chlor-5"-sulfophenylamino)-1,3,5-triazin | orange |
| 10 | do. | do. | 2-(3'-Amino-4'-sulfophenylamino)-4-fluor-6-(N-äthyl-N-phenylamino)-1,3,5-triazin | do. |
| 11 | do. | do. | 2-(3'-Amino-4'-sulfophenylamino)-4-fluor-6-(2"-sulfophenylamino)-1,3,5-triazin | do. |
| 12 | 3-Amino-5-hydroxynaphthalin-7-sulfonsäure | do. | 2-(3'-Amino-4'-sulfophenylamino)-4-fluor-6-(1",5"-disulfonapthth-2"-ylamino)-1,3,5-triazin | do. |
| 13 | do. | do. | 2-(4'-Amino-2',5'-disulfophenylamino)-4-fluor-6-(1"-sulfonaphth-2"-ylamino)-1,3,5-triazin | rot |
| 14 | do. | do. | 2-(3'-Amino-4'-sulfophenylamino)-4-fluor-6-(2",5"-disulfophenylamino)-1,3,5-triazin | orange |
| 15 | do. | do. | 2-(4'-Amino-2',5'-disulfophenylamino)-4-fluor-6-(2"-chlor-5"-sulfophenylamino)-1,3,5-triazin | rot |
| 16 | do. | do. | 2-(3'-Amino-4'-sulfophenylamino)-4-fluor-6-(N-äthyl-N-phenylamino)-1,3,5-triazin | orange |

Tabelle 2 (Fortsetzung)

| Nr. | Kupplungskomponente | Acylierungsmittel | Diazokomponente | Farbton auf Baumwolle |
|---|---|---|---|---|
| 17 | 3-Amino-5-hydroxynaphthalin-7-sulfonsäure | 2,4-Dichlor-6-(β-äthoxyäthoxy)-1,3,5-triazin | 2-(3'-Amino-4'-sulfophenylamino)-4-fluor-6-(2"-sulfophenylamino)-1,3,5-triazin | orange |
| 18 | do. | 2,4-Dichlor-6-isopropoxy-1,3,5-triazin | 2-(3'-Amino-4'-sulfophenylamino)-4-fluor-6-(1",5"-disulfonaphth-2"-ylamino)-1,3,5-triazin | do. |
| 19 | do. | do. | 2-(4'-Amino-2',5'-disulfophenylamino)-4-fluor-6-(1"-sulfonaphth-2"-ylamino)-1,3,5-triazin | rot |
| 20 | do. | do. | 2-(3'-Amino-4'-sulfophenylamino)-4-fluor-6-(2",5"-disulfophenylamino)-1,3,5-triazin | orange |
| 21 | do. | do. | 2-(4'-Amino-2',5'-disulfophenylamino)-4-fluor-6-(2"-chlor-5"-sulfophenylamino)-1,3,5-triazin | rot |
| 22 | do. | do. | 2-(3'-Amino-4-sulfophenylamino)-4-fluor-6-(N-äthyl-N-phenylamino)-1,3,5-triazin | orange |
| 23 | do. | do. | 2-(3'-Amino-4'-sulfophenylamino)-4-fluor-6-(2"-sulfophenylamino)-1,3,5-triazin | do. |

Beispiel 3

23,9 Teile 2-Amino-5-hydroxynaphthalin-7-sulfonsäure werden in 800 ml Wasser neutral gelöst und die Lösung auf 10 °C abgekühlt. Nach Zusatz einer neutralen Mischung von 28,8 Teilen 2,4-Difluor-6-(2'-sulfophenylamino)-1,3,5-triazin und 300 ml Wasser wird die Temperatur innert 2 bis 3 Stunden auf 20 bis 25 °C erhöht und dabei der pH der Reaktionsmischung durch ständige Zugabe von 2n Natriumhydroxydlösung bei 7,0 bis 7,5 gehalten. Nach vollständiger Reaktion wird bei 0 bis 5 °C eine Mischung von 36,0 Teilen diazotiertem 2-(3'-Amino-4'-sulfophenylamino)-4-chlor-6-isopropoxy-1,3,5-triazin und 300 Teilen Wasser zugegeben. Nach vollständiger Kupplungsreaktion bei pH 6,5 bis 7,5 wird der gebildete Reaktivfarbstoff der Formel

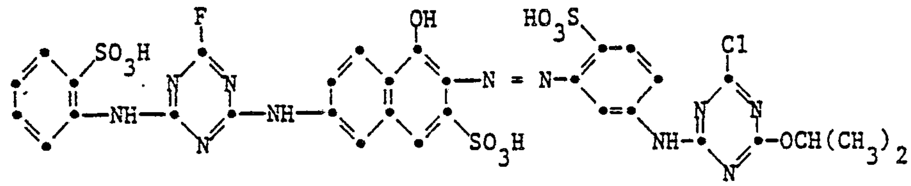

durch Eindampfen der Reaktionslösung bei pH 7 isoliert. Er färbt Baumwolle in orangen Tönen.

Weitere wertvolle Reaktivfarbstoffe, die Baumwolle in der in Tabelle 3, Spalte 5, angegebenen Farbtönen färben, werden erhalten, wenn man gemäss den Angaben in Beispiel 3 die in Spalte 2 angegebene Kupplungskomponente mit dem in Spalte 3 angegebenen Acylierungsmittel acyliert und auf das so erhaltene Zwischenprodukt die in Spalte 4 angegebene diazotierte Diazokomponente kuppelt.

(Siehe Tabelle 3 Seite 27 f.)

Tabelle 3

| Nr. | Kupplungskomponente | Acylierungsmittel | Diazokomponente | Farbton auf Baumwolle |
|---|---|---|---|---|
| 1 | 2-Amino-5-hydroxynaphthalin-7-sulfonsäure | 2,4-Difluor-6-(1',5'-disulfonaphth-2'-ylamino)-1,3,5-triazin in frischer, wässriger Reaktionslösung | 2-(3'-Amino-4'-sulfophenylamino)-4-chlor-6-isopropoxy-1,3,5-triazin | orange |
| 2 | do. | do. | 2-(4'-Amino-2',5'-disulfophenylamino)-4-chlor-6-isopropoxy-1,3,5-triazin | do. |
| 3 | 3-Amino-5-hydroxynaphthalin-7-sulfonsäure | do. | 2-(3'-Amino-4'-sulfophenylamino)-4-chlor-6-(β-äthoxyäthoxy)-1,3,5-triazin | do. |
| 4 | do. | do. | 2-(4'-Amino-2',5'-disulfophenylamino)-4-chlor-6-(β-äthoxyäthoxy)-1,3,5-triazin | rot |

Beispiel 4

31,9 Teile 1-Amino-8-hydroxynaphthalin-3,6-disulfonsäure werden in 800 ml Wasser neutral gelöst und die Lösung auf 0 bis 5 °C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 13,3 Teilen N-Aethylaminobenzol mit 100 ml Wasser wird der pH der Reaktionslösung durch ständige Zugabe von 2n Natriumhydroxydlösung zuerst kurze Zeit schwach kongosauer und dann bei 5 bis 6 gehalten. Dabei wird die Temperatur innert 2 bis 3 Stunden auf 20 bis 25 °C erhöht. Nach vollständiger Reaktion wird dieses Zwischenprodukt bei 0 bis 10 °C und pH 5 mit 36,0 Teilen diazotiertem 2-(3'-Amino-4'-sulfophenylamino)-4-chlor-6-isopropoxy-1,3,5-triazin gekuppelt. Nach vollständiger Kupplungsreaktion bei pH 7 wird die Reaktionsmischung geklärt und der gebildete Reaktivfarbstoff der Formel

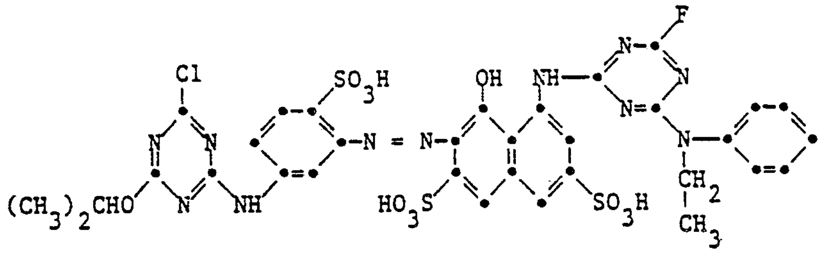

durch Eindampfen oder Gefriertrocknen der Reaktionslösung bei pH 7 isoliert. Er färbt Baumwolle in roten Tönen.

Weitere wertvolle Reaktivfarbstoffe, die Baumwolle in den in Tabelle 4, Spalte 5, angegebenen Farbtönen färben, werden erhalten, wenn man gemäss den Angaben in Beispiel 4 die in Spalte 2 angegebene Kupplungskomponente zuerst mit 2,4,6-Trifluor-1,3,5-triazin und dann mit der in Spalte 3 angegebenen Aminoverbindung umsetzt und auf das so erhaltene Zwischenprodukt die in Spalte 4 angegebene diazotierte Diazokomponente kuppelt.

(Siehe Tabelle 4 Seite 29 ff.)

Tabelle 4

| Nr. | Kupplungskomponente | Aminoverbindung | Diazokomponente | Farbton auf Baumwolle |
|---|---|---|---|---|
| 1 | 1-Amino-8-hydroxynaphthalin-3,6-disulfonsäure | N-Aethylaminobenzol | 2-(3'-Amino-4'-sulfophenylamino)-4-chlor-6-(β-äthoxyäthoxy)-1,3,5-triazin | rot |
| 2 | do. | do. | 2-(4'-Amino-2',5'-disulfophenylamino)-4-chlor-6-isopropoxy-1,3,5-triazin | blaustichig rot |
| 3 | do. | β-Hydroxyäthylamin | 2-(4'-Amino-2',5'-disulfophenylamino)-4-chlor-6-isopropoxy-1,3,5-triazin | do. |
| 4 | do. | do. | 2-(3'-Amino-4'-sulfophenylamino)-4-chlor-6-isopropoxy-1,3,5-triazin | rot |
| 5 | do. | do. | 2-(3'-Amino-4'-sulfophenylamino)-4-chlor-6-(β-äthoxyäthoxy)-1,3,5-triazin | do. |
| 6 | do. | Morpholin | 2-(3'-Amino-4'-sulfophenylamino)-4-chlor-6-(β-äthoxyäthoxy)-1,3,5-triazin | do. |
| 7 | do. | do. | 2-(3'-Amino-4'-sulfophenylamino)-4-chlor-6-isopropoxy-1,3,5-triazin | do. |
| 8 | do. | do. | 2-(4'-Amino-2',5'-disulfophenylamino)-4-chlor-6-isopropoxy-1,3,5-triazin | blaustichig rot |
| 9 | do. | 1-Aminobenzol-3-sulfonsäure | 2-(4'-Amino-2',5'-disulfophenylamino)-4-chlor-6-isopropoxy-1,3,5-triazin | do. |

Tabelle 4 (Fortsetzung)

| Nr. | Kupplungskomponente | Aminoverbindung | Diazokomponente | Farbton auf Baumwolle |
|---|---|---|---|---|
| 10 | 1-Amino-8-hydroxynaphthalin-3,6-disulfonsäure | 1-Aminobenzol-3-sulfonsäure | 2-(3'-Amino-4'-sulfophenylamino)-4-chlor-6-isopropoxy-1,3,5-triazin | rot |
| 11 | do. | do. | 2-(3'-Amino-4'-sulfophenylamino)-4-chlor-6-(β-äthoxyäthoxy)-1,3,5-triazin | do. |
| 12 | do. | 1-Amino-2-methylbenzol | 2-(4'-Amino-2',5'-disulfophenylamino)-4-chlor-6-isopropoxy-1,3,5-triazin | blaustichig rot |
| 13 | do. | do. | 2-(3'-Amino-4'-sulfophenylamino)-4-chlor-6-isopropoxy-1,3,5-triazin | rot |
| 14 | do. | do. | 2-(3'-Amino-4'-sulfophenylamino)-4-chlor-6-(β-äthoxyäthoxy)-1,3,5-triazin | do. |
| 15 | 2-Amino-5-hydroxynaphthalin-7-sulfonsäure | N-Aethylaminobenzol | 2-(3'-Amino-4'-sulfophenylamino)-4-chlor-6-(β-äthoxyäthoxy)-1,3,5-triazin | orange |
| 16 | do. | do. | 2-(3'-Amino-4'-sulfophenylamino)-4-chlor-6-isopropoxy-1,3,5-triazin | do. |
| 17 | do. | do. | 2-(4'-Amino-2',5'-disulfophenylamino)-4-chlor-6-isopropoxy-1,3,5-triazin | do. |

Tabelle 4 (Fortsetzung)

| Nr. | Kupplungskomponente | Aminoverbindung | Diazokomponente | Farbton auf Baumwolle |
|---|---|---|---|---|
| 18 | 2-Amino-5-hydroxynaphthalin-7-sulfonsäure | β-Hydroxyäthylamin | 2-(4'-Amino-2',5'-disulfophenylamino)-4-chlor-6-isopropoxy-1,3,5-triazin | orange |
| 19 | do. | do. | 2-(3'-Amino-4'-sulfophenylamino)-4-chlor-6-isopropoxy-1,3,5-triazin | do. |
| 20 | do. | do. | 2-(3'-Amino-4'-sulfophenylamino)-4-chlor-6-(β-äthoxyäthoxy)-1,3,5-triazin | do. |
| 21 | do. | β-Sulfoäthylamin | 2-(4'-Amino-2',5'-disulfophenylamino)-4-chlor-6-isopropoxy-1,3,5-triazin | do. |
| 22 | do. | do. | 2-(3'-Amino-4'-sulfophenylamino)-4-chlor-6-isopropoxy-1,3,5-triazin | do. |
| 23 | do. | do. | 2-(3'-Amino-4'-sulfophenylamino)-4-chlor-6-(β-äthoxyäthoxy)-1,3,5-triazin | do. |
| 24 | do. | 1-Aminobenzol-3-sulfonsäure | 2-(3'-Amino-4'-sulfophenylamino)-4-chlor-6-(β-äthoxyäthoxy)-1,3,5-triazin | do. |
| 25 | do. | do. | 2-(3'-Amino-4'-sulfophenylamino)-4-chlor-6-isopropoxy-1,3,5-triazin | do. |
| 26 | do. | do. | 2-(4'-Amino-2',5'-disulfophenylamino)-4-chlor-6-isopropoxy-1,3,5-triazin | do. |

Tabelle 4 (Fortsetzung)

| Nr. | Kupplungskomponente | Aminoverbindung | Diazokomponente | Farbton auf Baumwolle |
|---|---|---|---|---|
| 27 | 2-Amino-5-hydroxynaphthalin-7-sulfonsäure | 1-Amino-2-methylbenzol | 2-(4'-Amino-2',5'-disulfophenylamino)-4-chlor-6-isopropoxy-1,3,5-triazin | orange |
| 28 | do. | do. | 2-(3'-Amino-4'-sulfophenylamino)-4-chlor-6-isopropoxy-1,3,5-triazin | do. |
| 29 | do. | do. | 2-(3'-Amino-4'-sulfophenylamino)-4-chlor-6-(β-äthoxyäthoxy)-1,3,5-triazin | do. |

In analoger Weise, wie in den vorangehenden Beispielen beschrieben, erhält man weitere wertvolle Reaktivfarbstoffe, wenn man die reaktiv acylierten Diazokomponenten, welche auf der linken Seite der folgenden Tabelle aufgeführt sind, diazotiert und mit den auf der rechten Seite der Tabelle aufgeführten reaktiv acylierten Kupplungskomponenten kuppelt.

(Siehe Formeln Seite 34 ff.)

Färbevorschrift I

2 Teile des gemäss Beispiel 1 erhaltenen Farbstoffes werden in 400 Teilen Wasser gelöst ; dazu gibt man 1 500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Sode enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst ; dazu gibt man 1 500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35 °C gehalten. Danach wird die Temperatur innerhalb 20 Minuten auf 60 °C erhöht. Die Temperatur wird weitere 35 Minuten bei 60 °C gehalten. Danach wird gespült, während einer Viertelstunde mit einem nichtionogenen Waschmittel kochend geseift, nochmals gespült und getrocknet.

Färbevorschrift III

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift IV

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,1 Liter Wasserglas (38 °Bé) enthält. Mit der erhaltenen Lösung wird ein Baumwollgewebe foulardiert, so dass es um 70 % seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichts zunimmt, und dann getrocknet. Dann imprägniert man das Gewebe mit einer 20 °C warmen Lösung, die pro Liter 4 Gramm Natriumhydroxyd und 300 Gramm Natriumchlorid enthält, quetscht auf 75 % Gewichtszunahme ab, dämpft die Färbung während 30 Sekunden bei 100 bis 102 °C, spült, seift während einer Viertelstunde in einer 0,3 %igen kochenden Lösung eines nichtionogenen Waschmittels, spült und trocknet.

Druckvorschrift

3 Teile des gemäss Beispiel 1 erhaltenen Reaktivfarbstoffes werden unter schnellem Rühren in 100 Teile einer Stammverdickung, enthaltend 50 Teile 5-%ige Natriumalginatverdickung 27.8 Teile Wasser, 20 Teile Harnstoff, 1 Teil m-nitrobenzolsulfonsäures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

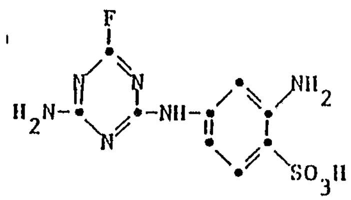

marineblau

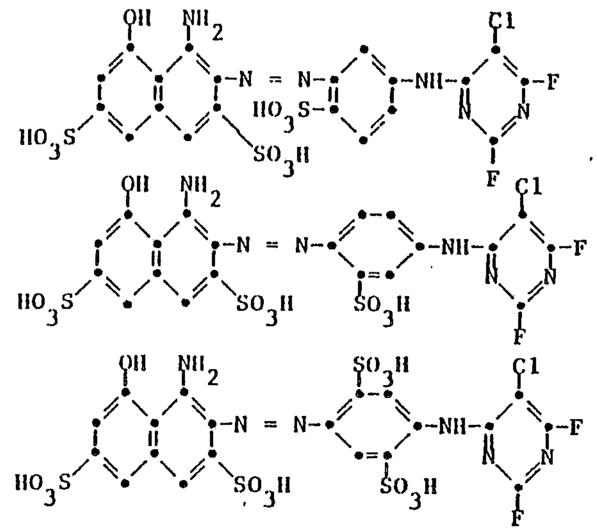

do.

grünstichig marineblau

do.

do.

do.

do.

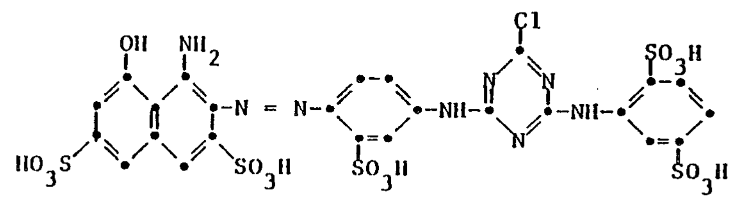

do.

marineblau

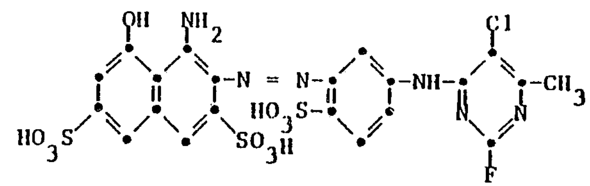

| | | |
|---|---|---|
| 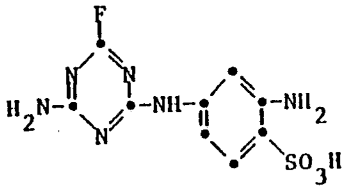 | marineblau | 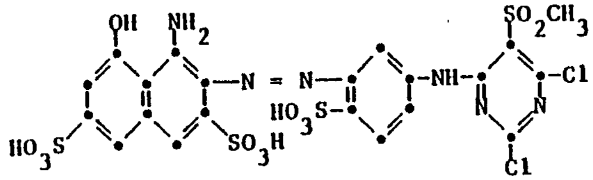 |
| do. | do. | 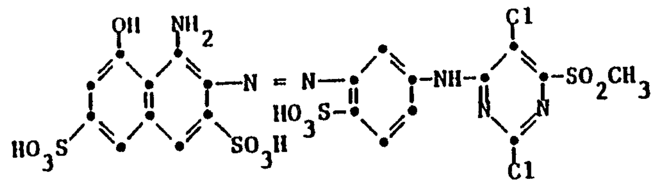 |
| 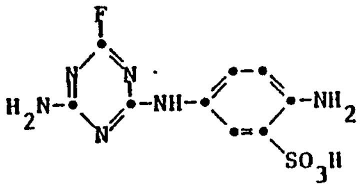 | grünstichig marineblau | 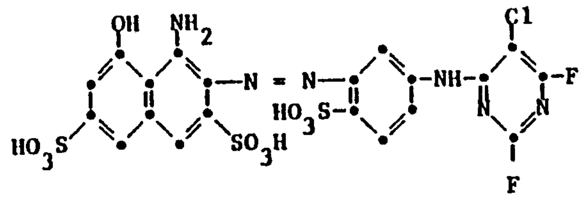 |
| do. | do. | 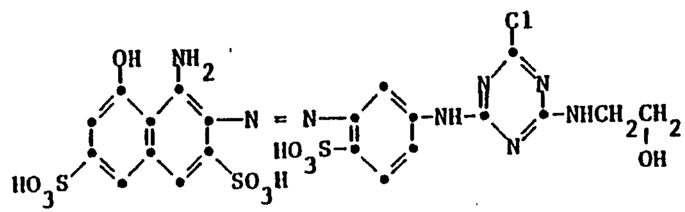 |
| do. | do. | 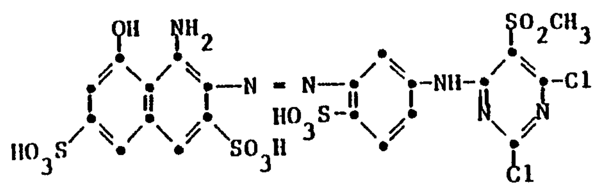 |

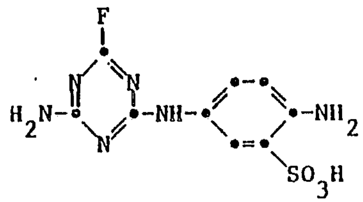

grünstichig marineblau

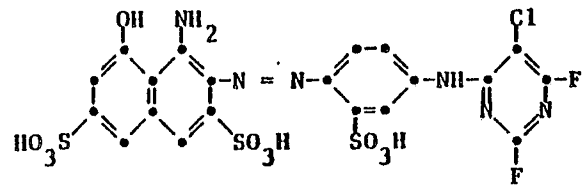

do.

do.

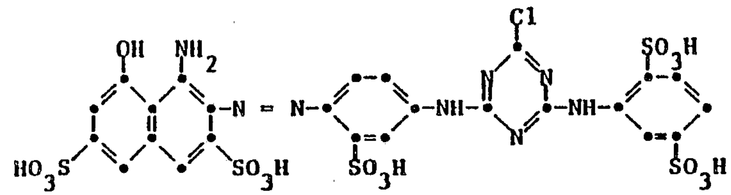

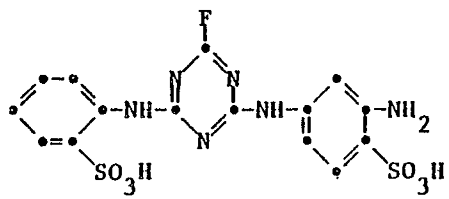

marineblau

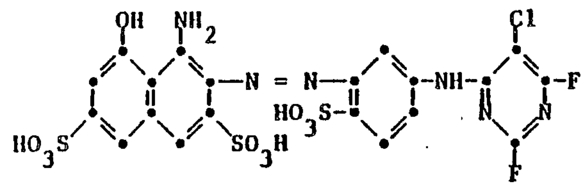

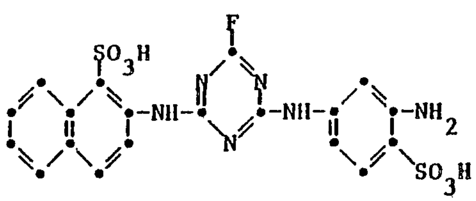

do.

do.

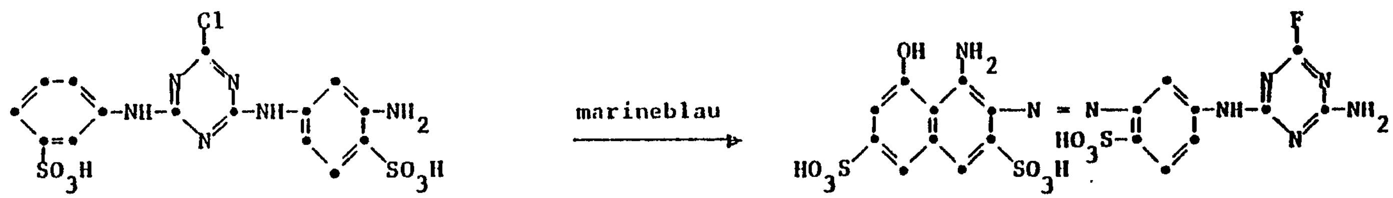


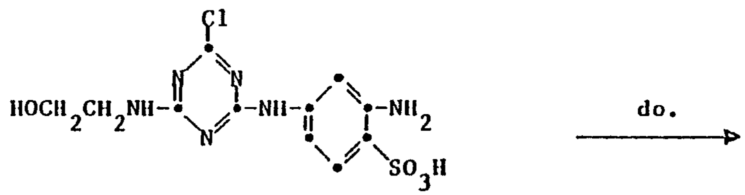


do.

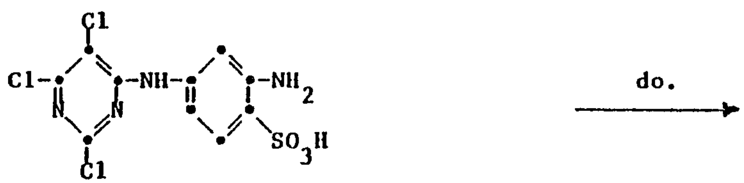


do.

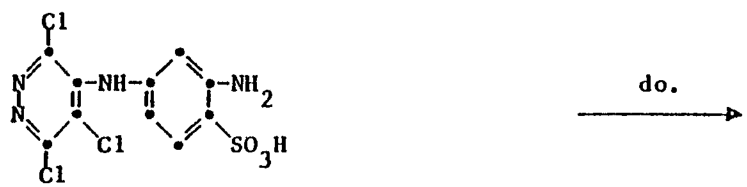


do.

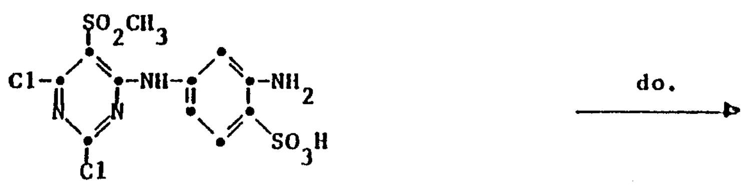


do.

| | | |
|---|---|---|
| 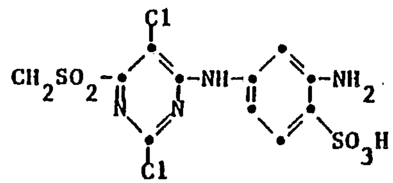 | marineblau | 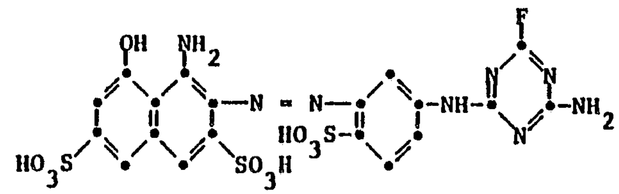 |
| 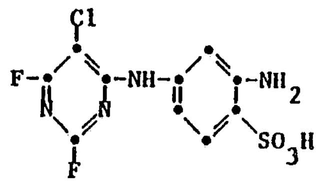 | do. | do. |
| 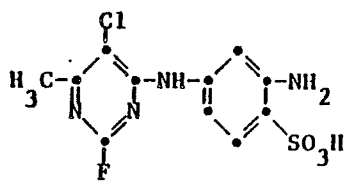 | do. | do. |
| 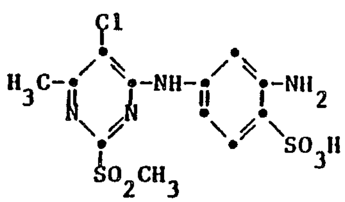 | do. | do. |
| 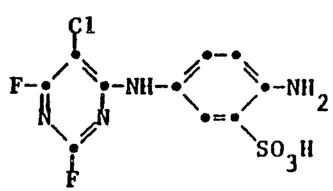 | grünstichig marineblau | do. |

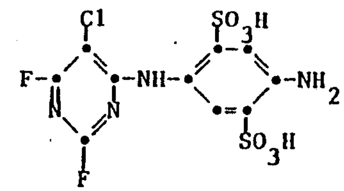

grünstichig marineblau

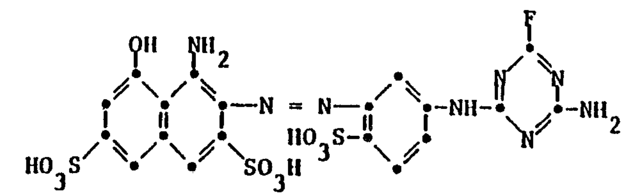

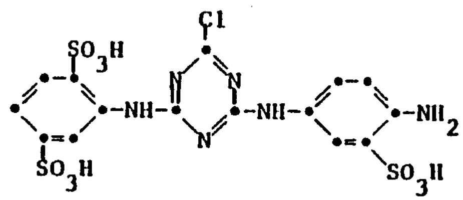

do.

do.

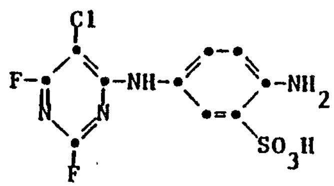

do.

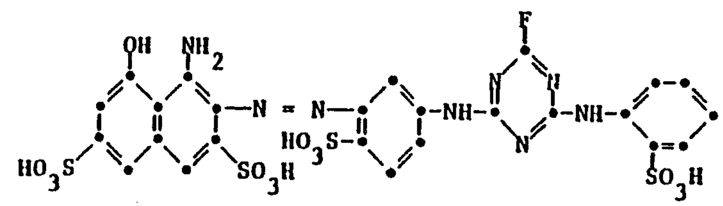

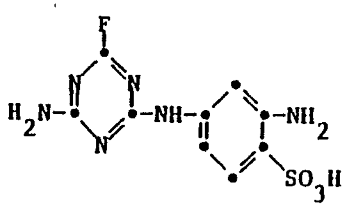

blaustichig rot

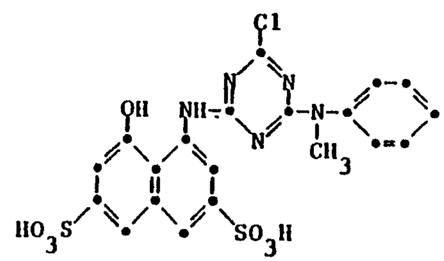

| | | |
|---|---|---|
| 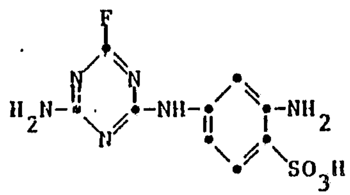 | blaustichig rot | 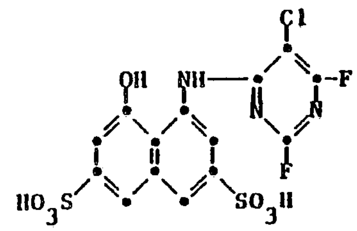 |
| do. | do. | 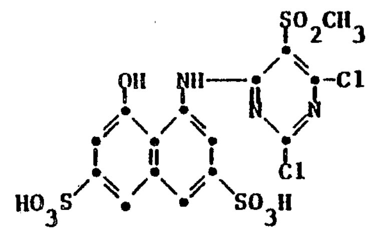 |
| do. | do. | 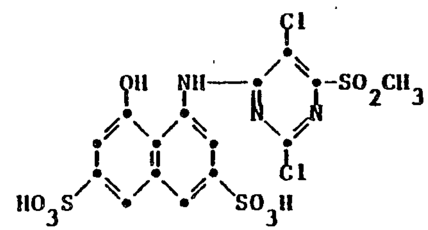 |
| ac. | do. | 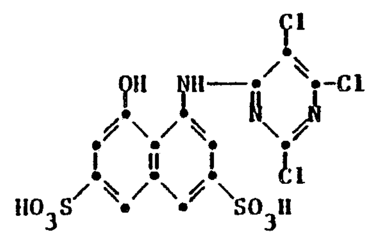 |

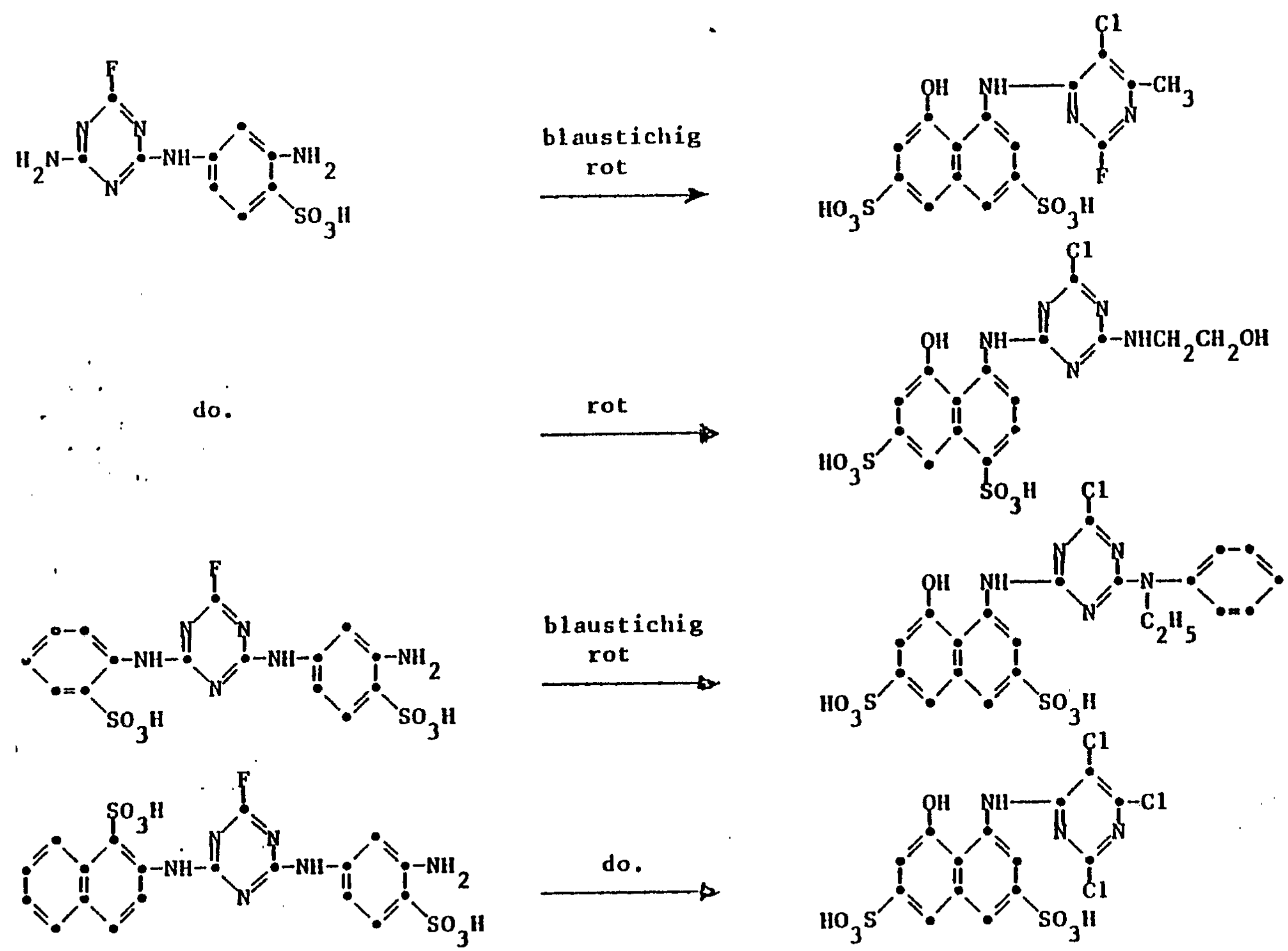
blaustichig rot
do.
rot
blaustichig rot
do.

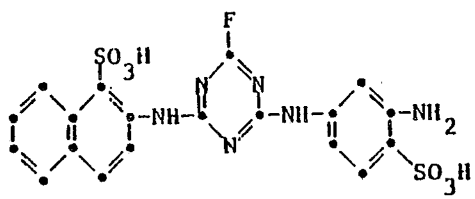

blaustichig rot

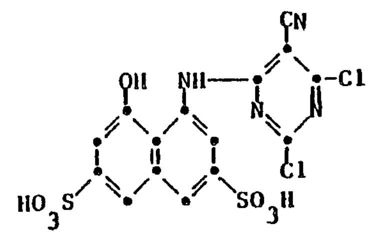

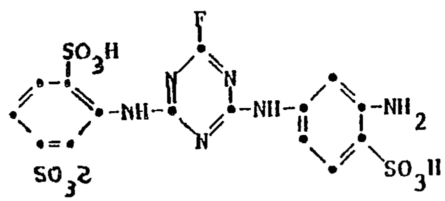

rot

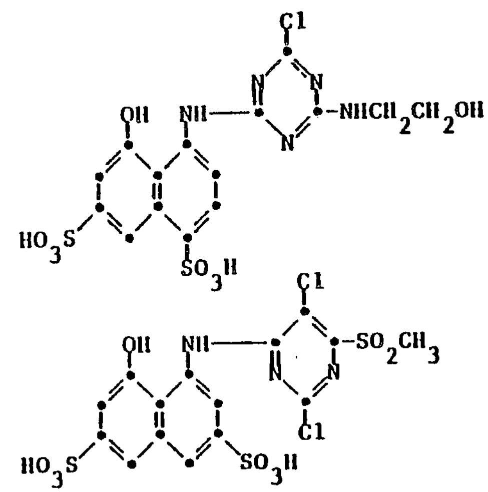

do.

blaustichig rot

| | | |
|---|---|---|
| 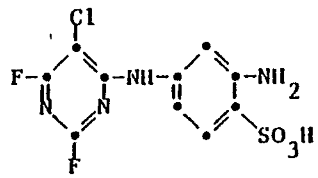 | blaustichig rot | 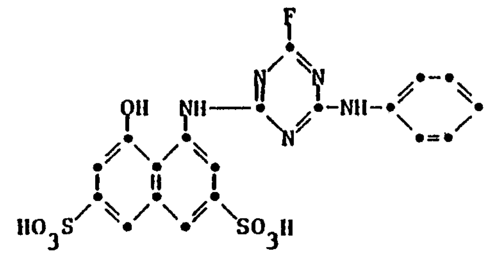 |
| do. | do. | 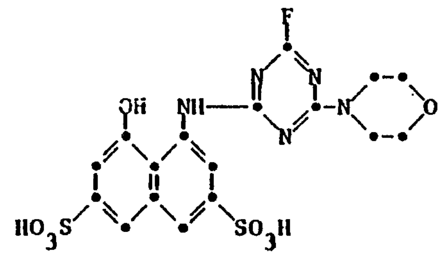 |
| do. | do. | 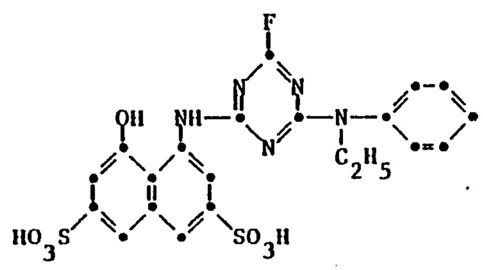 |

| | | |
|---|---|---|
| 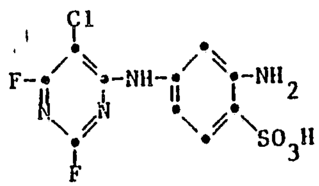 | blaustichig rot | 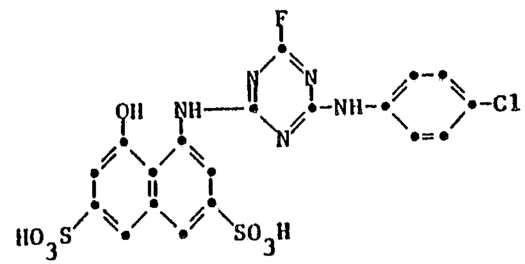 |
| do. | orange | 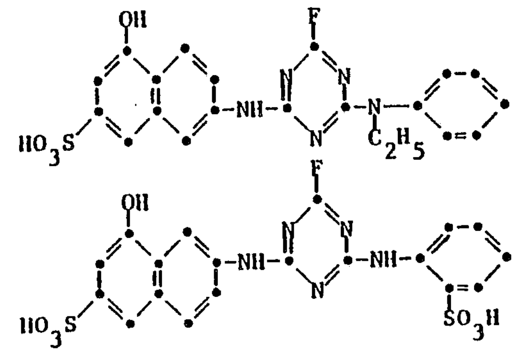 |
| do. | do. | |
| do. | gelb | 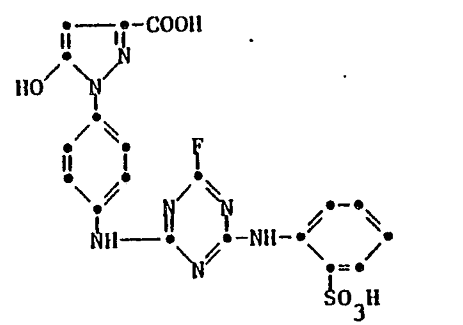 |

| | | |
|---|---|---|
| 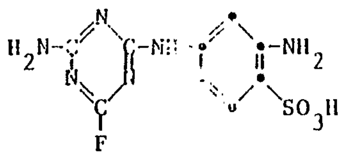 | blaustichig rot | 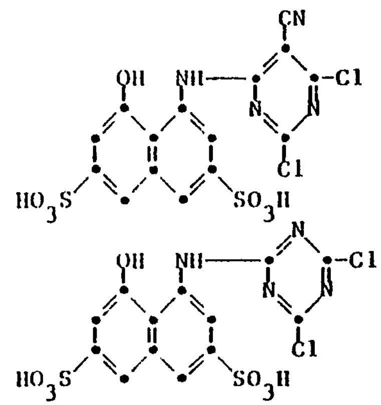 |
| do. | do. | |
| do. | do. | 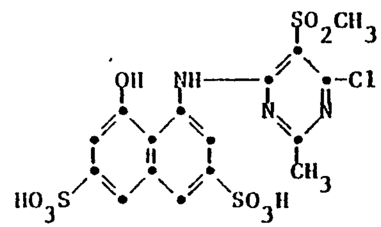 |
| do. | do. | 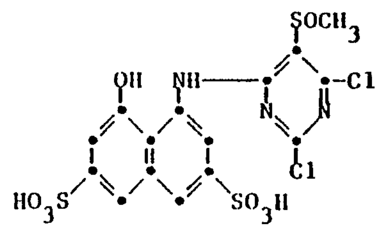 |
| do. | do. | 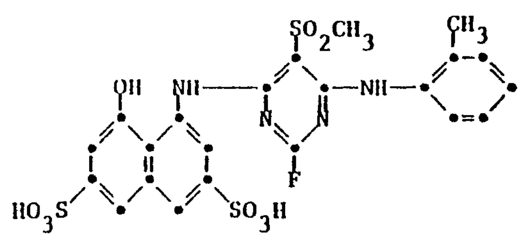 |

**Patentansprüche**

1. Reaktivfarbstoffe der Formel

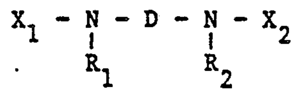

(1)

worin D der Rest eines Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, $R_1$ und $R_2$ unabhängig voneinander Wasserstoff oder ein gegebenenfalls substituierter $C_{1-4}$-Alkylrest, $X_1$ ein unsubstituierter oder substituierter Aminofluor-s-triazin-Rest und $X_2$ ein heterocyclischer Reaktivrest, der direkt über das $-N(R_2)$-Brückenglied an den Farbstoffrest D gebunden ist, ausgenommen ein unsubstituierter oder substituierter Aminofluor-s-triazinrest, ist.

2. Reaktivfarbstoffe gemäss Anspruch 1, worin D der Rest eines Mono- oder Disazofarbstoffes oder eines Metallkomplexazofarbstoffes ist.

3. Reaktivfarbstoffe gemäss Anspruch 2, der Formel

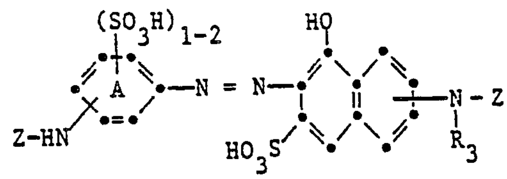

(2)

worin die beiden Reste Z alternativ $X_1$ oder $X_2$ sind, und $X_1$ und $X_2$ die für Anspruch 2 geltenden Bedeutungen haben, $R_3$ Wasserstoff, Methyl oder Aethyl ist, und der Benzolring A gegebenenfalls weitersubstituiert ist.

4. Reaktivfarbstoffe gemäss Anspruch 2, der Formel

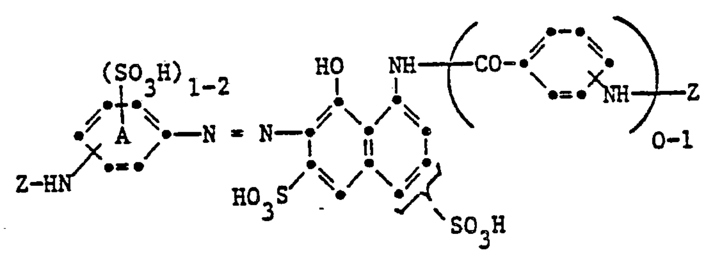

(3)

worin die beiden Reste Z alternativ $X_1$ oder $X_2$ sind, und $X_1$ und $X_2$ die für Anspruch 2 geltenden Bedeutungen haben, und der Benzolring A gegebenenfalls weitersubstituiert ist.

5. Reaktivfarbstoffe gemäss Anspruch 3, worin der Benzolring A nicht weitersubstituiert ist.

6. Reaktivfarbstoffe gemäss Anspruch 3, worin $R_3$ Wasserstoff, Methyl oder Aethyl ist.

7. Reaktivfarbstoffe gemäss Anspruch 4, worin der Benzolring A nicht weitersubstituiert ist.

8. Reaktivfarbstoffe gemäss Anspruch 2, der Formel

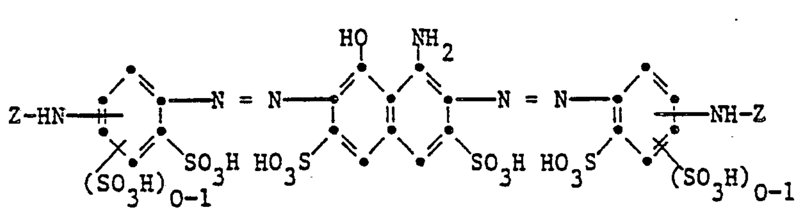

(4)

worin die beiden Reste Z alternativ $X_1$ oder $X_2$ sind, und $X_1$ und $X_2$ die für Anspruch 2 geltenden Bedeutungen haben.

9. Reaktivfarbstoffe gemäss einem der Ansprüche 1 bis 8, worin $X_1$ ein unsubstituierter oder substituierter Aminofluor-s-triazinrest, und $X_2$ ein unsubstituierter oder substituierter Amino- oder Alkoxy-chlor-s-triazin-Rest, oder ein Halogenpyrimidin- oder Halogenpyridazin-Rest ist.

10. Reaktivfarbstoffe gemäss Anspruch 9, worin $X_1$ ein Rest der Formel

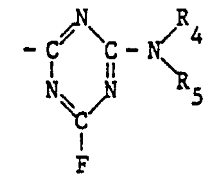

(I)

ist worin $R_4$ und $R_5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenäthyl, Cyclohexyl, Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo ist, oder worin $R_4$ und $R_5$ zusammen mit dem Aminostickstoffatom einen Morpholino-, Piperidino- oder Piperazinorest bilden, und $X_2$ ein Rest der Formel

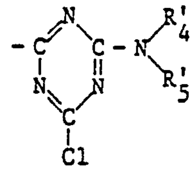

(II)

ist, worin $R'_4$ und $R'_5$ unabhängig voneinander die gleichen Bedeutungen haben wie $R_4$ und $R_5$, unabhängig von diesen, oder ein Rest der Formel

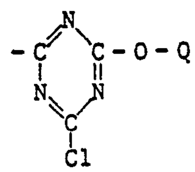

(III)

ist, worin Q ein $C_{1-6}$-Alkylrest ist, der durch Halogen, Hydroxy, Cyan, $C_{1-4}$-Alkoxy, $C_{1-4}$-Alkoxy-$C_{1-4}$-alkoxy, $C_{1-4}$-Alkoxycarbonyl, Carboxy, Sulfo, Sulfato, Sulfamoyl, Carbamoyl, Cyclohexyl oder Phenyl substituiert sein kann, oder ein Rest der Formel

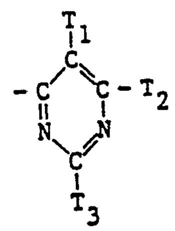

(IV)

ist, worin $T_1$ Wasserstoff, Chlor, Fluor, Cyan, Nitro, Methylsulfonyl oder Methylsulfinyl, $T_2$ Wasserstoff, Methyl, Chlor, Fluor, Methylsulfonyl, $NH_2$ oder ein Alkylamino-, Cycloalkylamino-, Aralkylamino- oder Arylaminorest, und $T_3$ Wasserstoff, Chlor, Fluor, Methylsulfonyl oder Methyl ist, mit der Bedingung, dass mindestens einer der Reste $T_1$, $T_2$ und $T_3$ Chlor oder Fluor ist.

11. Reaktivfarbstoffe gemäss Anspruch 10, worin $X_1$ ein Rest der Formel (I) ist, worin die Aminogruppe $-NR_4R_5$ : $-NH_2$, N-β-Hydroxyäthylamino, N,N-Di-β-Hydroxyäthylamino, β-Sulfoäthylamino, Phenylamino, das gegebenenfalls im Phenylkern substituiert ist durch Chlor, Methyl, Aethyl, Methoxy, Aethoxy, Acetylamino, Hydroxy, Carboxy, Sulfomethyl oder Sulfo, N-$C_{1-4}$-Alkyl-N-phenylamino, das gegebenenfalls im Phenylkern substituiert ist durch Chlor, Methyl oder Aethyl, N-Sulfo-$C_{1-4}$-alkyl-N-phenylamino, das gegebenenfalls im Phenylkern substituiert ist durch Chlor, Methyl oder Aethyl, N-Hydroxy-$C_{1-4}$-alkyl-N-phenylamino, oder Sulfonaphthylamino ist, und $X_2$ ein 2,4-Difluor-5-chlorpyrimidyl-(6)-Rest ist.

12. Verfahren zur Herstellung von Reaktivfarbstoffen gemäss Anspruch 1, dadurch gekennzeichnet, dass man Farbstoffe der Formel

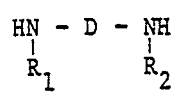

oder ihre Vorprodukte mit einem Fluortriazin und einer heterocyclischen Reaktivkomponente kondensiert, oder die erhaltenen Zwischenprodukte in die gewünschten Endfarbstoffe überführt, und gegebenenfalls in den reaktiven Zwischenprodukten oder den erhaltenen Farbstoffen abspaltbare Substituenten an den Reaktivresten durch Kondensation mit Verbindungen, die austauschbare Wasserstoffatome enthalten, durch nichtreaktive Substituenten ersetzt.

13. Verwendung der Reaktivfarbstoffe gemäss Anspruch 1, zum Färben oder Bedrucken von cellulosehaltigen Fasermaterialien.

14. Verwendung gemäss Anspruch 13, zum Färben oder Bedrucken von Baumwolle.

**Claims**

1. Reactive dyes of the formula

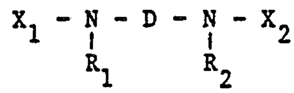

(1)

wherein D is the radical of a dye of the monoazo or polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series, $R_1$ and $R_2$ independently of one another are hydrogen or an unsubstituted or substituted $C_{1-4}$-alkyl radical, $X_1$ is an unsubstituted or substituted aminofluoro-s-triazine radical and $X_2$ is a heterocyclic reactive radical which is attached directly to the dye radical D through the —$N(R_2)$-bridge member, excepting an unsubstituted or substituted aminofluoro-s-triazine radical.

2. Reactive dyes according to claim 1, wherein D is the radical of a monoazo or disazo dye or of a metal complex azo dye.

3. Reactive dyes according to claim 2, of the formula

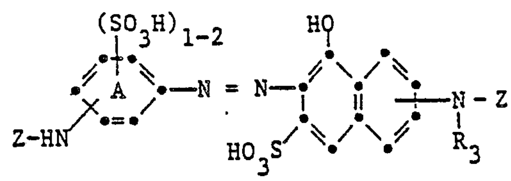

(2)

wherein both radicals Z are alternatively $X_1$ or $X_2$, and $X_1$ and $X_2$ have the meanings applying to claim 2, $R_3$ is hydrogen, methyl or ethyl, and the benzene ring A may be further substituted.

4. Reactive dyes according to claim 2, of the formula

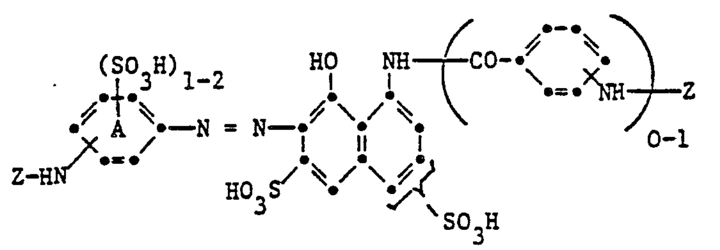

(3)

wherein both radicals Z are alternatively $X_1$ or $X_2$, and $X_1$ and $X_2$ have the meanings applying to claim 2, and the benzene ring A may be further substituted.

5. Reactive dyes according to claim 3, wherein the benzene ring A is not further substituted.

6. Reactive dyes according to claim 3, wherein $R_3$ is hydrogen, methyl or ethyl.

7. Reactive dyes according to claim 4, wherein the benzene ring A is not further substituted.

8. Reactive dyes according to claim 2, of the formula

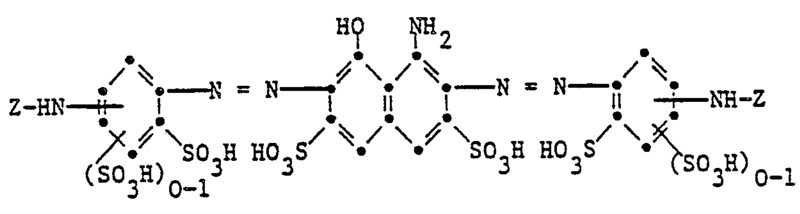

(4)

wherein both radicals Z are alternatively $X_1$ or $X_2$, and $X_1$ and $X_2$ have the meanings applying to claim 2.

9. Reactive dyes according to one of claims 1 to 8, wherein $X_1$ is an unsubstituted or substituted aminofluoro-s-triazine radical, and $X_2$ is an unsubstituted or substituted aminochloro-s-triazine or alkoxychloro-s-triazine radical, or a halopyrimidine or halopyridazine radical.

10. Reactive dyes according to claim 9, wherein $X_1$ is a radical of the formula

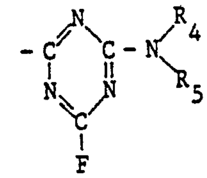 (I)

wherein $R_4$ and $R_5$ independently of one another are hydrogen, $C_{1-4}$-alkyl which is unsubstituted or substituted by halogen, cyano, $C_{1-4}$-alkoxy, hydroxyl, carboxy, sulfo or sulfato, benzyl, phenethyl, cyclohexyl, phenyl which is unsubstituted or substituted by halogen, nitro, cyano, trifluoromethyl, sulfamoyl, carbamoyl, $C_{1-4}$-alkyl, $C_{1-4}$-alkoxy, $C_{1-4}$-alkanoylamino, benzoylamino, ureido, hydroxyl, carboxy, sulfomethyl or sulfo, or naphthyl which is unsubstituted or substituted by halogen, nitro, $C_{1-4}$-alkoxy, $C_{1-4}$-alkanoylamino, hydroxyl, carboxy or sulfo, or wherein $R_4$ and $R_5$ together with the amino nitrogen atom form a morpholino, piperidino or piperazino radical, and $X_2$ is a radical of the formula

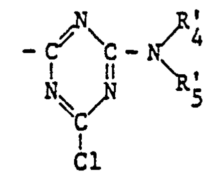 (II)

wherein $R'_4$ and $R'_5$ independently of one another have the same meanings as $R_4$ and $R_5$, independently thereof, or a radical of the formula

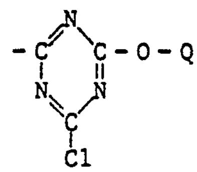 (III)

wherein Q is a $C_{1-6}$-alkyl radical, which can be substituted by halogen, hydroxyl, cyano, $C_{1-4}$-alkoxy, $C_{1-4}$-alkoxy-$C_{1-4}$-alkoxy, $C_{1-4}$-alkoxycarbonyl, carboxy, sulfo, sulfato, sulfamoyl, carbamoyl, cyclohexyl or phenyl, or a radical of the formula

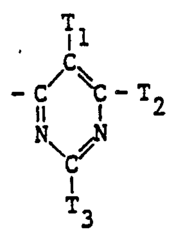 (IV)

wherein $T_1$ is hydrogen, chlorine, fluorine, cyano, nitro, methylsulfonyl or methylsulfinyl, $T_2$ is hydrogen, methyl, chlorine, fluorine, methylsulfonyl, $NH_2$ or an alkylamino, cycloalkylamino, aralkylamino or arylamino radical, and $T_3$ is hydrogen, chlorine, fluorine, methylsulfonyl or methyl, with the proviso that at least one of the radicals $T_1$, $T_2$ and $T_3$ is chlorine or fluorine.

11. Reactive dyes according to claim 10, wherein $X_1$ is a radical of the formula (1), wherein the amino group $-NR_4R_5$ is: $-NH_2$, N-β-hydroxyethylamino, N,N-di-β-hydroxyethylamino, β-sulfoethylamino, phenylamino which is unsubstituted or substituted in the phenyl nucleus by chlorine, methyl, ethyl, methoxy, ethoxy, acetylamino, hydroxyl, carboxy, sulfomethyl or sulfo, N-$C_{1-4}$-alkyl-N-phenylamino which is unsubstituted or substituted in the phenyl nucleus by chlorine, methyl or ethyl, N-sulfo-$C_{1-4}$-alkyl-N-phenylamino which is unsubstituted or substituted in the phenyl nucleus by chlorine, methyl or ethyl, N-hydroxy-$C_{1-4}$-alkyl-N-phenylamino, or sulfonaphthylamino, and $X_2$ is a 2,4-difluoro-5-chloropyrimid-6-yl radical.

12. A process for the preparation of reactive dyes according to claim 1, characterized in that dyes of the formula

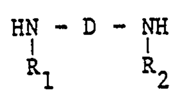

or their precursors are condensed with a fluorotriazine and a heterocyclic reactive component, or the intermediates obtained are converted to the desired final dyes, and if desired substituents, which can be eliminated, on the reactive radicals in the reactive intermediates or the dyes obtained are replaced by nonreactive substituents by means of condensation with compounds which contain exchangeable hydrogen atoms.

13. The use of reactive dyes according to claim 1, for dyeing or printing cellulosic fibre materials.

14. The use according to claim 13, for dyeing or printing cotton.

**Revendications**

1. Colorants réactifs de formule

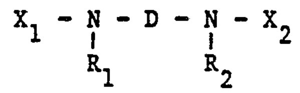

(1)

dans laquelle D est le reste d'un colorant de la série mono-azoïque ou poly-azoïque, azoïque à complexe métallique, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide ; $R_1$ et $R_2$ sont, indépendamment l'un de l'autre, un atome d'hydrogène ou un reste alkyle en $C_1$-$C_4$ éventuellement substitué ; $X_1$ est un reste aminofluoro-s-triazine substitué ou non substitué, et $X_2$ est un reste réactif hétérocyclique qui est lié directement au reste d'un colorant D par le chaînon pontant —$N(R_2)$, à l'exception d'un reste aminofluoro-s-triazine substitué ou non substitué.

2. Colorants réactifs selon la revendication 1, dans lesquels D est le reste d'un colorant mono- ou disazoïque ou d'un colorant azoïque à complexe métallique.

3. Colorants réactifs selon la revendication 2, de formule

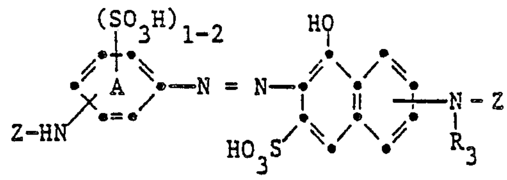

(2)

dans laquelle les deux restes Z sont l'un $X_1$ et l'autre $X_2$, et $X_1$ et $X_2$ ont les significations valables pour la revendication 2 ; $R_3$ est un atome d'hydrogène ou un groupe méthyle ou éthyle ; et le noyau benzénique A est éventuellement substitué davantage.

4. Colorants réactifs selon la revendication 2, de formule

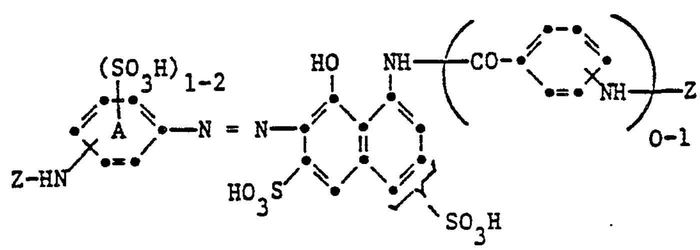

(3)

dans laquelle les deux restes Z sont l'un $X_1$ et l'autre $X_2$, $X_1$ et $X_2$ ont les significations valables pour la revendication 2, et le noyau benzénique A est éventuellement substitué davantage.

5. Colorants réactifs selon la revendication 3, dans lesquels le noyau benzénique A n'est pas substitué davantage.

6. Colorants réactifs selon la revendication 3, dans lesquels $R_3$ est un atome d'hydrogène ou le groupe méthyle ou éthyle.

7. Colorants réactifs selon la revendication 4, dans lesquels le noyau benzénique A n'est pas substitué davantage.

8. Colorants réactifs selon la revendication 2, de formule

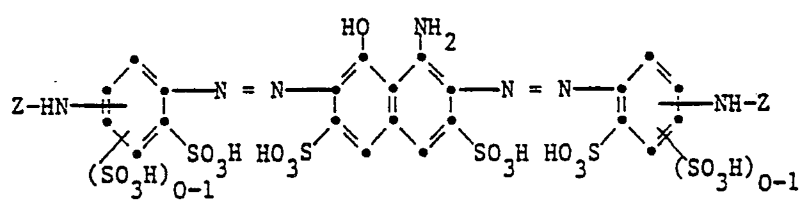

(4)

dans laquelle les deux restes Z sont l'un $X_1$ et l'autre $X_2$, et $X_1$ et $X_2$ ont les significations valables pour la revendication 2.

9. Colorants réactifs selon l'une des revendications 1 à 8, dans lesquels $X_1$ est un reste aminofluoro-s-triazine substitué ou non substitué, et $X_2$ est un reste amino- ou alcoxy-chloro-s-triazine substitué ou non substitué, ou un reste halogénopyrimidine ou halogénopyridazine.

10. Colorants réactifs selon la revendication 9, dans lesquels $X_1$ est un reste de formule

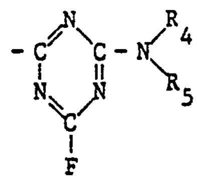

(I)

dans laquelle $R_4$ et $R_5$ sont, indépendamment l'un de l'autre, un atome d'hydrogène ou un radical alkyle en $C_1$-$C_4$ qui est éventuellement substitué par un atome d'halogène ou par un groupe cyano, alcoxy en $C_1$-$C_4$, hydroxyle, carboxyle, sulfo ou sulfato ; un radical benzyle, phénétyle, cyclohexyle, phényle qui est éventuellement substitué par un atome d'halogène ou par un groupe nitro, cyano, trifluorométhyle, sulfamyle, carbamyle, alkyle en $C_1$-$C_4$, alcoxy en $C_1$-$C_4$, alcanoyl($C_1$-$C_4$)-amino, benzoylamino, uréido, hydroxyle, carboxyle, sulfométhyle ou sulfo ; ou un radical naphtyle qui est éventuellement substitué par un atome d'halogène ou par un groupe nitro, alcoxy en $C_1$-$C_4$, alcanoyl($C_1$-$C_4$)-amino, hydroxyle, carboxyle ou sulfo ; ou dans laquelle $R_4$ et $R_5$ forment, conjointement avec l'atome d'azote en fonction amine, un reste morpholino, pipéridino ou pipérazino ; et $X_2$ est un reste de formule

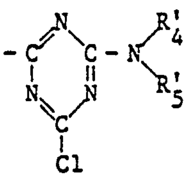

(II)

dans laquelle $R'_4$ et $R'_5$ ont, indépendamment l'un de l'autre, les mêmes significations que $R_4$ et $R_5$, indépendamment de ceux-ci, ou un reste de formule

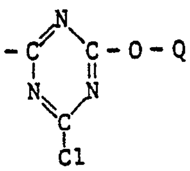

(III)

dans laquelle Q est un radical alkyle en $C_1$-$C_6$ qui peut être substitué par un atome d'halogène ou par un groupe hydroxyle, cyano, alcoxy en $C_1$-$C_4$, alcoxy($C_1$-$C_4$)-alcoxy($C_1$-$C_4$), alcoxy($C_1$-$C_4$)-carbonyle, carboxyle, sulfo, sulfato, sulfamyle, carbamyle, cyclohexyle ou phényle, ou un reste de formule

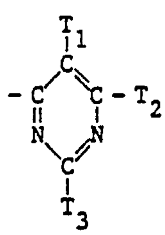

(IV)

dans laquelle $T_1$ est un atome d'hydrogène, de chlore ou de fluor, ou un groupe cyano, nitro, méthylsulfonyle ou méthylsulfinyle, $T_2$ est un atome d'hydrogène, de chlore ou de fluor, $NH_2$ ou un radical méthyle, méthylsulfonyle, alkylamino, cycloalkylamino, aralkylamino ou arylamino ; et $T_3$ est un atome d'hydrogène, de chlore ou de fluor, ou un radical méthylsulfonyle ou méthyle, à la condition qu'au moins un des restes $T_1$, $T_2$ et $T_3$ soit un atome de chlore ou de fluor.

11. Colorants réactifs selon la revendication 10, dans lesquels $X_1$ est un reste de formule (I), dans lequel le groupe amino —$NR_4R_5$ représente : —$NH_2$, N-β-hydroxyéthylamino, N,N-di-β-hydroxyéthylamino, β-sulfoéthylamino, phénylamino qui est éventuellement substitué sur le noyau phényle par un atome de chlore ou par un groupe méthyle, éthyle, méthoxy, éthoxy, acétylamino, hydroxyle, carboxyle, sulfométhyle ou sulfo ; N-alkyl($C_1$-$C_4$)-N-phénylamino qui est éventuellement substitué sur le noyau phényle par un atome de chlore ou par un groupe méthyle ou éthyle ; N-sulfo-alkyl($C_1$-$C_4$)-N-phénylamino qui est éventuellement substitué sur le noyau phényle par un atome de chlore ou par un groupe méthyle ou

éthyle ; N-hydroxy-alkyl($C_1$-$C_4$)-N-phénylamino, ou sulfonaphtylamino ; et $X_1$ est un reste 2,4-difluoro-5-chloropyrimidyl-(6).

12. Procédé pour la préparation des colorants réactifs selon la revendication 1, caractérisé par le fait que l'on condense des colorants de formule

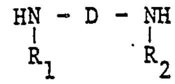

ou leurs précurseurs, avec une fluorotriazine et un composant réactif hétérocyclique, ou l'on transforme les produits intermédiaires obtenus en les colorants finals recherchés, et dans les produits intermédiaires réactifs ou les colorants obtenus, on remplace éventuellement des substituants séparables sur les restes réactifs par des substituants non réactifs, par condensation avec des composés qui contiennent des atomes d'hydrogène échangeables.

13. Utilisation des colorants réactifs selon la revendication 1, pour la teinture ou l'impression de matériaux fibreux cellulosiques.

14. Utilisation selon la revendication 13, pour la teinture ou l'impression du coton.